(19) Europäisches Patentamt / European Patent Office / Office européen des brevets

(11) **EP 4 726 741 A1**

(12) **EUROPEAN PATENT APPLICATION**
published in accordance with Art. 153(4) EPC

(43) Date of publication:
**15.04.2026 Bulletin 2026/16**

(21) Application number: **24819240.3**

(22) Date of filing: **29.05.2024**

(51) International Patent Classification (IPC):
$H01B\ 1/10^{(2006.01)}$    $C03C\ 10/16^{(2006.01)}$
$H01B\ 1/06^{(2006.01)}$    $H01B\ 1/08^{(2006.01)}$
$H01M\ 4/62^{(2006.01)}$    $H01M\ 10/052^{(2010.01)}$
$H01M\ 10/0562^{(2010.01)}$

(52) Cooperative Patent Classification (CPC):
Y02E 60/10

(86) International application number:
**PCT/JP2024/019793**

(87) International publication number:
**WO 2024/253009 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.06.2023 JP 2023095879**

(71) Applicant: **Idemitsu Kosan Co.,Ltd.**
**Tokyo 100-8321 (JP)**

(72) Inventors:
• **TERAI Kota**
  **Tokyo 100-8321 (JP)**
• **KADOTA Shogo**
  **Tokyo 100-8321 (JP)**

(74) Representative: **Vossius & Partner**
**Patentanwälte Rechtsanwälte mbB**
**Siebertstraße 3**
**81675 München (DE)**

(54) **CRYSTALLINE-SULFIDE SOLID ELECTROLYTE**

(57)     Provided is a crystalline sulfide solid electrolyte that has a high ionic conductivity with reduced raw material costs, the crystalline sulfide solid electrolyte containing a lithium atom, a phosphorus atom, a sulfur atom, an oxygen atom, and a halogen atom, and having a composition represented by a compositional formula $(100-y)(0.5)(Li_{3+2z}P(S_{1-x}O_x)_{4+z})+(y)\,LiX$ (in the compositional formula, x, y, and z satisfy $0.00060 \leqq x \leqq 0.25$, $0.50 \leqq y \leqq 14.0$, and $-0.17 \leqq z \leqq 1.5$, respectively, and X represents a halogen atom).

EP 4 726 741 A1

**Description**

Field of Invention

The present invention relates to a crystalline-sulfide solid electrolyte.

Background Art

With the rapid spread of, for example, information-related equipment and communication equipment, such as personal computers, video cameras, and mobile phones, in recent years, the development of batteries used as a power source therefor is gaining importance. Among others, from the viewpoint of high energy density, lithium ion batteries attract attentions.

Since an electrolytic solution containing a flammable organic solvent is used in batteries used in such applications, it is necessary to mount safety devices for preventing a temperature increase in cases of a short circuit and to improve the structure and material for preventing a short circuit. In such a situation, replacing the electrolytic solution with a solid electrolyte to make the batteries all-solid-state can avoid the use of a flammable organic solvent in the batteries, can simplify the safety devices thereof, and can improve the production cost and the productivity, and therefore, batteries in which a solid electrolyte layer is used in place of the electrolytic solution are being developed.

As a solid electrolyte for use in the solid electrolyte layer, various types of solid electrolytes have been developed. For example, PTL 1 discloses a solid electrolyte that contains a lithium (Li) element, a phosphorus (P) element, a sulfur (S) element, an oxygen (O) element, and a halogen element and that has a molar ratio of sulfur element / oxygen element of 0.2 to 100. PTL 2 discloses a solid electrolyte glass represented by $L_aM_bP_cS_dX_eO_f$ (1') (L represents an alkali metal, M represents one or more halogen elements selected from B, Al, Si, Ge, and the like, X represents one or more halogen elements selected from I, Cl, Br, and F, and X contains at least Br) and a production method thereof. PTL 3 discloses a sulfide solid electrolyte material that contains an ionic conductor having an ortho-composition and LiI, the ionic conductor containing oxygen.

Citation List

Patent Literature

PTL 1: JP 2014-93263 A
PTL 2: JP 2014-93261 A
PTL 3: JP 2014-89986 A

Summary of Invention

Technical Problem

The present invention has been made in view of the above circumstance, and has an object to provide a sulfide solid electrolyte that has a high ionic conductivity with reduced raw material costs.

Solution to Problem

The crystalline sulfide solid electrolyte according to the present invention is
a crystalline sulfide solid electrolyte containing a lithium atom, a phosphorus atom, a sulfur atom, an oxygen atom, and a halogen atom, and having a composition represented by the following compositional formula (1).

$$(100\text{-y})(0.5)(Li_{3+2z}P(S_{1-x}O_x)_{4+z})+(y)LiX \qquad (1)$$

(In the compositional formula (1), x, y, and z satisfy $0.00060 \leqq x \leqq 0.25$, $0.50 \leqq y \leqq 14.0$, and $-0.17 \leqq z \leqq 1.5$, respectively, and X represents a halogen atom.)

Advantageous Effects of Invention

According to the present invention, it is possible to provide a sulfide solid electrolyte that has a high ionic conductivity with reduced raw material costs.

Brief Description of Drawings

[Fig. 1] Fig. 1 shows X-ray diffraction patterns of crystalline sulfide solid electrolytes obtained in Examples.
[Fig. 2] Fig. 2 shows the X-ray diffraction patterns of the crystalline sulfide solid electrolytes obtained in Examples.
[Fig. 3] Fig. 3 shows the X-ray diffraction patterns of the crystalline sulfide solid electrolytes obtained in Examples.
[Fig. 4] Fig. 4 shows the X-ray diffraction patterns of the crystalline sulfide solid electrolytes obtained in Examples.
[Fig. 5] Fig. 5 shows X-ray diffraction patterns of crystalline sulfide solid electrolytes obtained in Comparative Examples.
[Fig. 6] Fig. 6 shows the X-ray diffraction patterns of the crystalline sulfide solid electrolytes obtained in Comparative Examples.
[Fig. 7] Fig. 7 shows solid $^{31}$P-NMR spectra of the crystalline sulfide solid electrolytes obtained in Examples.

Description of Embodiments

An embodiment of the present invention (which may be hereinafter referred to as "the present embodiment") will be described below. In the description herein, the numerical values of the upper limits and the lower limits of the numerical value ranges shown with "or more", "or less", and "to" are numerical values that can be optionally combined, and the numerical values in the examples can be used as numerical values of the upper limits and the lower limits.

(Findings acquired by the present inventors for achieving the present invention)

As a result of intensive and extensive studies for solving the above problem, the present inventors have found the following matters, thus completing the present invention.

Development of a solid electrolyte has heretofore been mainly made with a focus on enhancing the properties, such as the ionic conductivity and the hydrolysis resistance, of the solid electrolyte, as disclosed in PTLs 1 to 3. However, in the recent development of all-solid-state batteries for practical use, not only enhancement of such various properties but also reduction in the raw material costs has been focused on.

The solid electrolyte disclosed in PTL 1 contains a lithium (Li) element, a phosphorus (P) element, a sulfur (S) element, an oxygen (O) element, and a halogen element, and it is planned to enhance the ionic conductivity by incorporating a halogen element while enhancing the hydrolysis resistance, that is, preventing the generation of hydrogen sulfide by incorporating an oxygen element. However, the ionic conductivity is 0.21 to 2.2 mS/cm, which is not so high relative to the larger amount of a raw material containing a halogen element used. Since such a raw material containing a halogen element is relatively more expensive among raw materials of a solid electrolyte, the solid electrolyte disclosed in PTL 1 has a room for improvement in point of reduction in the raw material costs.

The solid electrolyte glass disclosed in PTL 2 is a solid electrolyte glass represented by the above compositional formula (1') that contains a metal element, such as B, Al, or Si, in addition to an alkali metal such as lithium, a phosphorus element, a sulfur element, a halogen element, and an oxygen element. PTL 2 also describes a glass ceramic obtained by subjecting the solid electrolyte glass to a heat treatment, but the ionic conductivity thereof is 0.80 to 2.2 mS/cm, which is not so high relative to the larger amount of a raw material containing a halogen element used. Thus, there is a room for improvement in point of reduction in the raw material costs like the solid electrolyte disclosed in PTL 1.

The sulfide solid electrolyte material disclosed in PTL 3 contains LiI and oxygen. By containing LiI, the ionic conductivity is enhanced, but on the other hand, reduction in chemical stability is caused. Thus, the reduction in chemical stability is prevented by oxygen. PTL 3 discloses one different from a crystalline sulfide solid electrolyte since it is stated in the paragraph [0010] that the Li ion conductivity can be increased because the amorphous nature is high to the extent that a glass transition point appears and an amorphous body that has a halo pattern in X-ray diffraction (XRD) measurement is described in Examples. According to Examples of PTL 3, the ionic conductivity is 0.6 to 1.2 mS/cm, which is not so high relative to the amount of a raw material containing a halogen element used. Thus, there is a room for improvement in point of reduction in the raw material costs like the solid electrolyte disclosed in PTL 1, and also in point of the ionic conductivity.

As described above, PTLs 1 to 3 focus on enhancing the ionic conductivity and the hydrolysis resistance, but in all of PTLs 1 to 3, the ionic conductivity is not so high relative to the amount of a raw material containing a halogen element used. In addition, PTLs 1 to 3 plan to enhance the ionic conductivity by using a halogen element, but such a technique has been known as a common technical knowledge without mentioning to such patent literatures. In view of such circumstances, there is no motivation to reduce the amount of a halogen element used in order to enhance the ionic conductivity in PTLs 1 to 3. Then, the patent literatures never disclose an idea of achieving a high ionic conductivity while reducing raw material costs by adding an oxygen atom to a sulfide solid electrolyte. Thus, it cannot be said that the related arts, such as PTL 1 to 3, can provide a crystalline sulfide solid electrolyte having a high ionic conductivity while reducing the raw material costs.

It has heretofore been believed that compositions for achieving crystal structures that exhibit a high ionic conductivity are limited only to some compositions, such as a thio-LISICON Region II-type crystal structure and an LGPS-type crystal structure obtained in Examples described later. In addition, by simply reducing the amount of a halogen atom used with no oxygen atom contained as in Comparative Examples described later, such a crystal structure does not appear and the ionic conductivity also decreases.

The present inventors focused on replacing a part of a sulfur atom with an oxygen atom in a sulfide solid electrolyte. As a result of development, they have found that a sulfide solid electrolyte that contains a lithium atom, a phosphorus atom, a sulfur atom, an oxygen atom, and a halogen atom and being represented by a specific compositional formula can have a high ionic conductivity while reducing raw material costs.

PTLs 1 to 3 never focus on the fact that a high ionic conductivity can be achieved while reducing raw material costs by replacing a part of a sulfur atom with an oxygen atom and in addition, making the composition be represented by a specific compositional formula, and in particular, also never focus on an idea to reduce raw material costs by incorporating an oxygen atom in place of a sulfur atom.

Thus, it is an amazing matter that has not conventionally been known to achieve a high ionic conductivity while reducing the raw material costs by a composition that contains a lithium atom, a phosphorus atom, a sulfur atom, an oxygen atom, and a halogen atom and is represented by a specific compositional formula.

In the description herein, the "solid electrolyte" means an electrolyte that maintains a solid state at 25°C under a nitrogen atmosphere. The "sulfide solid electrolyte" of the present embodiment is a solid electrolyte that contains an oxygen atom in addition to a lithium atom, a sulfur atom, a phosphorus atom, and a halogen atom, and that has an ionic conductivity caused by the lithium atom.

The "sulfide solid electrolyte" includes both a crystalline sulfide solid electrolyte which has a crystal structure and an amorphous sulfide solid electrolyte. In the description herein, the crystalline sulfide solid electrolyte refers to a solid electrolyte material in which a peak derived from the solid electrolyte is observed in an X-ray diffraction pattern in a powdery X-ray diffraction (XRD) measurement regardless of the presence or absence of a peak derived from a raw material of the solid electrolyte therein. In other words, the crystalline sulfide solid electrolyte contains a crystal structure derived from the solid electrolyte, and a part of the sulfide solid electrolyte may have a crystal structure derived from the solid electrolyte or the entire sulfide solid electrolyte may have a crystal structure derived from a solid electrolyte. Then, the crystalline sulfide solid electrolyte may contain an amorphous sulfide solid electrolyte (also referred to as "glass component") as a part thereof as long as it has such an X-ray diffraction pattern as described above. Accordingly, the crystalline sulfide solid electrolyte encompasses a so-called glass ceramic which is obtained by heating an amorphous solid electrolyte (glass component) to the crystallization temperature or higher.

In the description herein, the amorphous sulfide solid electrolyte (glass component) means a sulfide solid electrolyte that has an X-ray diffraction pattern, in a powdery X-ray diffraction (XRD) measurement, that is a halo pattern which has substantially no peak observed other than peaks derived from materials, regardless of the presence or absence of a peak derived from a raw material of the solid electrolyte.

(Various aspects of the present embodiment)

A sulfide solid electrolyte according to the first aspect of the present embodiment is,
a crystalline sulfide solid electrolyte that contains a lithium atom, a phosphorus atom, a sulfur atom, an oxygen atom, and a halogen atom and that has a composition represented by the following compositional formula (1).

$$(100-y)(0.5)(Li_{3+2z}P(S_{1-x}O_x)_{4+z})+(y)LiX \qquad (1)$$

(In the compositional formula (1), x, y, and z satisfy $0.00060 \leqq x \leqq 0.25$, $0.50 \leqq y \leqq 14.0$, and $-0.17 \leqq z \leqq 1.5$, respectively, and X represents a halogen atom.)

The crystalline sulfide solid electrolyte of the present embodiment contains a lithium atom, a phosphorus atom, a sulfur atom, an oxygen atom, and a halogen atom, and has a composition represented by the specific compositional formula as described above, and thus, has a high ionic conductivity with low costs. Here, regarding having a high ionic conductivity, it is known that the ionic conductivity is enhanced by using a lithium halide as described above. On the other hand, lithium halides are expensive and reduction in the amount of lithium halides used leads to reduction in the raw material costs, but in general, also leads to reduction in the ionic conductivity. In other words, reduction in the raw material costs and a high ionic conductivity have a relationship of antinomy.

The crystalline sulfide solid electrolyte of the present embodiment can achieve reduction in the raw material costs by having a composition represented by the specific compositional formula in which a part of a sulfur atom is replaced with an oxygen atom. That is, even when the amount of a raw material containing a halogen atom, such as a lithium halide, used is reduced, a high ionic conductivity can be achieved by having a composition represented by the compositional formula. Thus, the crystalline sulfide solid electrolyte of the present embodiment can simultaneously achieve reduction in the raw material costs and a high ionic conductivity.

A crystalline sulfide solid electrolyte according to the second aspect of the present embodiment is the crystalline sulfide solid electrolyte according to the above first aspect, in which

in the compositional formula (1), a product of x and y ($x \times y$) is 0.0050 or more and 2.7 or less.

In the compositional formula (1), x and y can be any numerical values selected from the above ranges, respectively, and when the product of x and y is within the above range, the numerical values have a good balance, and thus, reduction in the raw material costs and a high ionic conductivity are liable to be simultaneously achieved. More specifically, it is considered as follows. As described later, since x means the substitution rate with an oxygen atom in replacing a part of a sulfur atom with an oxygen atom and y means the content of a halogen atom, when the product thereof is within the above range, the amount of the oxygen atom and the amount of a halogen atom can have a good balance. By replacing a sulfur atom with an oxygen atom, the crystal lattice size can be decreased, and by further improving the balance between the amount of oxygen atoms and the amount of halogen atoms contained, a crystal structure having a high ionic conductivity, such as a thio-LISICON Region II-type crystal structure or an LGPS-type crystal structure, can be stabilized. Thus, it is considered to be liable to reduce the content of halogen atoms, which have been considered to be necessary for stabilizing the crystal structure that can exhibit a high ionic conductivity, that is, to reduce the raw material costs while achieving a high ionic conductivity at the same time.

A crystalline sulfide solid electrolyte according to the third aspect of the present embodiment is the crystalline sulfide solid electrolyte according to the first or second aspect, in which

a peak derived from $PSO_3^{3-}$ is observed at 39.6$\pm$5.0 ppm by a solid $^{31}$P-NMR measurement. A crystalline sulfide solid electrolyte according to the fourth aspect is the crystalline sulfide solid electrolyte according to any one of the first to third aspects, in which

a peak derived from $PO_4^{3-}$ is observed at 9.2$\pm$5.0 ppm by the solid $^{31}$P-NMR measurement. A crystalline sulfide solid electrolyte according to the fifth aspect is the crystalline sulfide solid electrolyte according to any one of the first to fourth aspect, in which

a peak derived from $PS_2O_2^{3-}$ is observed at 70.3$\pm$5.0 ppm by the solid $^{31}$P-NMR measurement.

When the peaks are observed by a solid $^{31}$P-NMR measurement, the crystalline sulfide solid electrolyte of the present embodiment is liable to have a high ionic conductivity with low costs.

A crystalline sulfide solid electrolyte according to the sixth aspect of the present embodiment is the crystalline sulfide solid electrolyte according to any one of the first to fifth aspect, in which

at least two exothermal peaks are measured in a thermogravimetric and differential thermal analysis (as measured at a temperature rising rate of 10°C/minute), the two exothermal peaks having a temperature difference at peak tops of 20°C or more and 110°C or less.

When the two exothermal peaks are observed in a thermogravimetric and differential thermal analysis, the crystalline sulfide solid electrolyte of the present embodiment is liable to have a high ionic conductivity with low costs.

A crystalline sulfide solid electrolyte according to the seventh aspect of the present embodiment is the crystalline sulfide solid electrolyte according to any one of the first to sixth aspect, in which

the halogen atom is at least one halogen atom selected from a chlorine atom, a bromine atom, and an iodine atom. A crystalline sulfide solid electrolyte according to the eighth aspect is the crystalline sulfide solid electrolyte according to any one of the first to seventh aspect, in which

the halogen atom is a bromine atom and an iodine atom.

When at least one halogen atom selected from a chlorine atom, a bromine atom, and an iodine atom, that is, a chlorine atom, a bromine atom, or an iodine atom alone, or two or more halogen atoms selected from the atoms, are adopted as the halogen atom, a higher ionic conductivity is liable to be achieved. Among them, when a bromine atom and an iodine atom are simultaneously adopted, a particularly high ionic conductivity is liable to be achieved.

A crystalline sulfide solid electrolyte according to the nineth aspect of the present embodiment is the crystalline sulfide solid electrolyte according to any one of the first to eighth aspect, in which

the crystalline sulfide solid electrolyte has an ionic conductivity of 0.70 mS/cm or more. A crystalline sulfide solid electrolyte according to the tenth aspect is the crystalline sulfide solid electrolyte according to any one of the first to nineth aspect, in which

the crystalline sulfide solid electrolyte has an ionic conductivity of 2.5 mS/cm or more.

Since the crystalline sulfide solid electrolyte of the present embodiment contains a lithium atom, a phosphorus atom, a sulfur atom, an oxygen atom, and a halogen atom, and has a composition represented by a specific compositional formula, the ionic conductivity is as high as in the above range.

A crystalline sulfide solid electrolyte according to the eleventh aspect of the present embodiment is the crystalline sulfide solid electrolyte according to any one of the first to tenth aspect, in which

at least one metal atom selected from a sodium atom, a boron atom, an aluminum atom, a silicon atom, a germanium atom, an arsenic atom, a selenium atom, an antimony atom, a tellurium atom, a lead atom, and a bismuth atom is not contained.

By not containing the metal atoms, the crystalline sulfide solid electrolyte of the present embodiment has a reduced content of impurities, and thus, the crystalline sulfide solid electrolyte of the present embodiment is liable to have a high ionic conductivity with low costs.

A crystalline sulfide solid electrolyte according to the twelfth aspect of the present embodiment is the crystalline sulfide solid electrolyte according to any one of the first to eleventh aspect, in which

the oxygen atom is derived from $P_2O_5$.

By adopting $P_2O_5$ as a raw material in producing of the crystalline sulfide solid electrolyte of the present embodiment, a part of a sulfur atom is easily replaced with an oxygen atom, and thus, an oxygen atom is easily incorporated in the structure of the solid electrolyte. Accordingly, the crystalline sulfide solid electrolyte of the present embodiment is liable to have a high ionic conductivity with low costs.

A crystalline sulfide solid electrolyte according to the thirteenth aspect of the present embodiment is the crystalline sulfide solid electrolyte according to any one of the first to twelfth aspect, in which

the crystalline sulfide solid electrolyte is a glass ceramic.

A glass ceramic is obtained by heating an amorphous solid electrolyte (glass component) to the crystallization temperature or higher as described above. The thus obtained crystalline sulfide solid electrolyte is liable to have a high ionic conductivity with low costs.

[Crystalline sulfide solid electrolyte]

The crystalline sulfide solid electrolyte of the present embodiment is

a crystalline sulfide solid electrolyte that contains a lithium atom, a phosphorus atom, a sulfur atom, an oxygen atom, and a halogen atom and has a composition represented by the following compositional formula (1).

$$(100-y)(0.5)(Li_{3+2z}P(S_{1-x}O_x)_{4+z})+(y)LiX \qquad (1)$$

(In the compositional formula (1), x, y, and z satisfy $0.00060 \leqq x \leqq 0.25$, $0.50 \leqq y \leqq 14.0$, and $-0.17 \leqq z \leqq 1.5$, and X represents a halogen atom.)

(Constitutional atoms)

The crystalline sulfide solid electrolyte of the present embodiment contains a lithium atom, a phosphorus atom, a sulfur atom, an oxygen atom, and a halogen atom.

Examples of the halogen atom include a fluorine atom, a chlorine atom, a bromine atom, and an iodine atom. Among the halogen atoms, from the view point of achieving a high ionic conductivity with low costs, a chlorine atom, a bromine atom, and an iodine atom are preferred, and a bromine atom and an iodine atom are preferred. As the halogen atom, one kind of these atoms can be contained alone or two or more kinds thereof can be contained.

The oxygen atom in the crystalline sulfide solid electrolyte of the present embodiment is preferably derived from $P_2O_5$. A method for producing the crystalline sulfide solid electrolyte of the present embodiment is not particularly limited as long as it provides a crystalline sulfide solid electrolyte that contains a lithium atom, a phosphorus atom, a sulfur atom, an oxygen atom, and a halogen atom, and has a composition represented by the aforementioned compositional formula. Raw materials used are also not limited, but, in view of easy replacement of a part of a sulfur atom in the structure of the crystalline sulfide solid electrolyte with an oxygen atom, $P_2O_5$ is preferably used as a raw material containing an oxygen atom.

In addition, the crystalline sulfide solid electrolyte of the present embodiment does preferably not contain at least one metal atom selected from a sodium atom, a boron atom, an aluminum atom, a silicon atom, a germanium atom, an arsenic atom, a selenium atom, an antimony atom, a tellurium atom, a lead atom, and a bismuth atom. Since these atoms are not contained, the crystalline sulfide solid electrolyte of the present embodiment is liable to achieve a high ionic conductivity with low costs.

Here, not containing a metal atom means not only literally never containing the metal atom (that is, 0% by mass) but also includes a case where a metal atom is inevitably contained, and the content in this case is 3% by mass or less, 2% by mass or less, 1% by mass, 0.5% by mass or less, 0.3% by mass or less, or 0.1% by mass or less, based on the entire amount of the crystalline sulfide solid electrolyte.

(Composition)

As described above, the crystalline sulfide solid electrolyte of the present embodiment contains a lithium atom, a phosphorus atom, a sulfur atom, an oxygen atom, and a halogen atom and has a composition represented by the following compositional formula (1). By having a composition represented by the following compositional formula (1), a high ionic conductivity is achieved with low costs. The types and composition of the atoms constituting the crystalline sulfide solid electrolyte of the present embodiment can be found, for example, with an ICP - atomic emission spectrometer.

$$(100-y)(0.5)(Li_{3+2z}P(S_{1-x}O_x)_{4+z})+(y)LiX \qquad (1)$$

In the compositional formula (1), x, y, and z satisfy $0.00060 \leqq x \leqq 0.25$, $0.50 \leqq y \leqq 14.0$, and $-0.17 \leqq z \leqq 1.5$, respectively. X represents a halogen atom.

x means the substitution rate with an oxygen atom in replacement of a part of a sulfur atom with an oxygen atom. x satisfies $0.00060 \leqq x \leqq 0.25$, from the view point of achieving a high ionic conductivity with low costs, x is preferably 0.0010 or more, more preferably 0.0050 or more, further preferably 0.010 or more, furthermore preferably 0.011 or more, particularly preferably 0.012 or more, and the upper limit is preferably 0.20 or less, more preferably 0.15 or less, further preferably 0.11 or less, furthermore preferably 0.080 or less.

Typical preferred examples of the numerical value range of x include 0.00060 or more and 0.20 or less, 0.00060 or more and 0.15 or less, 0.00060 or more and 0.11 or less, 0.00060 or more and 0.080 or less, 0.0010 or more and 0.20 or less, 0.0010 or more and 0.15 or less, 0.0010 or more and 0.11 or less, 0.0010 or more and 0.080 or less, 0.0050 or more and 0.20 or less, 0.0050 or more and 0.15 or less, 0.0050 or more and 0.11 or less, 0.0050 or more and 0.080 or less, 0.010 or more and 0.25 or less, 0.010 or more and 0.20 or less, 0.010 or more and 0.15 or less, 0.010 or more and 0.11 or less, 0.010 or more and 0.080 or less, 0.011 or more and 0.25 or less, 0.011 or more and 0.20 or less, 0.011 or more and 0.15 or less, 0.011 or more and 0.11 or less, 0.011 or more and 0.080 or less, 0.012 or more and 0.25 or less, 0.012 or more and 0.20 or less, 0.012 or more and 0.15 or less, 0.012 or more and 0.11 or less, and 0.012 or more and 0.080 or less.

y means the content of the halogen atom. In the compositional formula (1), the raw material containing a halogen atom is represented by LiX (lithium halide) for convenience but is not limited to a lithium halide, and as described later, may be, for example, an elemental halogen.

y satisfies $0.50 \leqq y \leqq 14.0$, and from the view point of achieving a high ionic conductivity with low costs, y is preferably 1.0 or more, more preferably 1.5 or more, further preferably 3.0 or more, furthermore preferably 7.0 or more, particularly preferably 8.0 or more, more particularly preferably 9.0 or more, and the upper limit is preferably 13.5 or less, more preferably 13.0 or less, further preferably 12.7 or less, furthermore preferably 12.0 or less.

Typical preferred examples of the numerical value range of y include 0.50 or more and 14.0 or less, 0.50 or more and 13.5 or less, 0.50 or more and 13.0 or less, 0.50 or more and 12.7 or less, 0.50 or more and 12.0 or less, 1.0 or more and 14.0 or less, 1.0 or more and 13.5 or less, 1.0 or more and 13.0 or less, 1.0 or more and 12.7 or less, 1.0 or more and 12.0 or less, 1.5 or more and 14.0 or less, 1.5 or more and 13.5 or less, 1.5 or more and 13.0 or less, 1.5 or more and 12.7 or less, 1.5 or more and 12.0 or less, 3.0 or more and 14.0 or less, 3.0 or more and 13.5 or less, 3.0 or more and 13.0 or less, 3.0 or more and 12.7 or less, 3.0 or more and 12.0 or less, 7.0 or more and 14.0 or less, 7.0 or more and 13.5 or less, 7.0 or more and 13.0 or less, 7.0 or more and 12.7 or less, 7.0 or more and 12.0 or less, 8.0 or more and 14.0 or less, 8.0 or more and 13.5 or less, 8.0 or more and 13.0 or less, 8.0 or more and 12.7 or less, 8.0 or more and 12.0 or less, 9.0 or more and 14.0 or less, 9.0 or more and 13.5 or less, 9.0 or more and 13.0 or less, 9.0 or more and 12.7 or less, and 9.0 or more and 12.0 or less.

z means the shift of the ratio of the lithium atoms and the sulfur atoms from the $Li_3PS_4$ structure which is a basic skeleton of the thio-LISICON Region II-type crystal structure and an LGPS-type crystal structure.

z satisfies $-0.17 \leqq z \leqq 1.5$, and from the view point of achieving a high ionic conductivity with low costs, z is preferably -0.15 or more, more preferably -0.11 or more, further preferably -0.080 or more, furthermore preferably -0.040 or more, particularly preferably -0.020 or more, and the upper limit is preferably 1.0 or less, more preferably 0.90 or less, further preferably 0.60 or less, furthermore preferably 0.40 or less, particularly preferably 0.20 or less.

Typical preferred examples of the numerical value range of z include -0.17 or more and 1.5 or less, -0.17 or more and 1.0 or less, -0.17 or more and 0.90 or less, -0.17 or more and 0.60 or less, -0.17 or more and 0.40 or less, -0.17 or more and 0.20 or less, -0.15 or more and 1.5 or less, -0.15 or more and 1.0 or less, -0.15 or more and 0.90 or less, -0.15 or more and 0.60 or less, -0.15 or more and 0.40 or less, -0.15 or more and 0.20 or less, -0.11 or more and 1.5 or less, -0.11 or more and 1.0 or less, -0.11 or more and 0.90 or less, -0.11 or more and 0.60 or less, -0.11 or more and 0.40 or less, -0.11 or more and 0.20 or less, -0.080 or more and 1.5 or less, -0.080 or more and 1.0 or less, -0.080 or more and 0.90 or less, -0.080 or more and 0.60 or less, -0.080 or more and 0.40 or less, -0.080 or more and 0.20 or less, -0.040 or more and 1.5 or less, -0.040 or more and 1.0 or less, -0.040 or more and 0.90 or less, -0.040 or more and 0.60 or less, -0.040 or more and 0.40 or less, -0.040 or more and 0.20 or less, -0.020 or more and 1.5 or less, -0.020 or more and 1.0 or less, -0.020 or more and 0.90 or less, -0.020 or more and 0.60 or less, -0.020 or more and 0.40 or less, and -0.020 or more and 0.20 or less.

The product of x and y (x×y) is preferably 0.0050 or more, more preferably 0.010 or more, further preferably 0.025 or more, furthermore preferably 0.050 or more, particularly preferably 0.075 or more, more particularly preferably 0.10 or more, and the upper limit is preferably 2.7 or less, more preferably 2.0 or less, further preferably 1.25 or less, furthermore preferably 0.60 or less, particularly preferably 0.45 or less, more particularly preferably 0.28 or less. As described above, x and y may be any numerical values selected from the above ranges, respectively, but when x and y that satisfy the product of x and y (x×y) in the above range are adopted, such x and y are numerical values of a good balance, and thus, a high ionic conductivity is liable to be achieved with low cost.

Typical preferred examples of the numerical value rage of the product of x and y (x×y) include 0.0050 or more and 2.7 or less, 0.0050 or more and 2.0 or less, 0.0050 or more and 1.25 or less, 0.0050 or more and 0.60 or less, 0.0050 or more and 0.45 or less, 0.0050 or more and 0.28 or less, 0.010 or more and 2.7 or less, 0.010 or more and 2.0 or less, 0.010 or more and 1.25 or less, 0.010 or more and 0.60 or less, 0.010 or more and 0.45 or less, 0.010 or more and 0.28 or less, 0.025 or more and 2.7 or less, 0.025 or more and 2.0 or less, 0.025 or more and 1.25 or less, 0.025 or more and 0.60 or less, 0.025 or more and 0.45 or less, 0.025 or more and 0.28 or less, 0.050 or more and 2.7 or less, 0.050 or more and 2.0 or less, 0.050 or more and 1.25 or less, 0.050 or more and 0.60 or less, 0.050 or more and 0.45 or less, 0.050 or more and 0.28 or less, 0.075 or more and 2.7 or less, 0.075 or more and 2.0 or less, 0.075 or more and 1.25 or less, 0.075 or more and 0.60 or less, 0.075 or more and 0.45 or less, 0.075 or more and 0.28 or less, 0.10 or more and 2.7 or less, 0.10 or more and 2.0 or less, 0.10 or more and 1.25 or less, 0.10 or more and 0.60 or less, 0.10 or more and 0.45 or less, and 0.10 or more and 0.28 or less.

In the compositional formula (1), X represents a halogen atom. The halogen atom is the same as the halogen atom explained as a halogen atom that constitutes the crystalline sulfide solid electrolyte of the present embodiment.

(Solid $^{31}$P-NMR spectrum)

In the crystalline sulfide solid electrolyte of the present embodiment, a peak derived from $PSO_3^{3-}$ is preferably observed at 39.6±5.0 ppm by a solid $^{31}$P-NMR measurement. In addition, a peak derived from $PO_4^{3-}$ at 9.2±5.0 ppm and further, a peak derived from $PS_2O_2^{3-}$ at 70.3±5.0 ppm are preferably observed therein. Here, the measurement method of the solid $^{31}$P-NMR measurement in the description herein will be described in the section of Examples. The peaks by the solid $^{31}$P-NMR measurement may each vary within the range of ±5.0 ppm, further within the range of ±4.0 ppm, ±3.0 ppm, or ±2.0 ppm.

The peak derived from $PSO_3^{3-}$, the peak derived from $PO_4^{3-}$, and the peak derived from $PS_2O_2^{3-}$ indicate that the crystalline sulfide solid electrolyte of the present embodiment has at least an oxygen atom in the structure thereof. A crystalline sulfide solid electrolyte having the peaks in a solid $^{31}$P-NMR spectrum is one in which an oxygen atom is incorporated in the structure, that is, a part of a sulfur atom is replaced with an oxygen atom, and thus, achieves a high ionic conductivity with low costs.

(Exothermal peaks)

In the crystalline sulfide solid electrolyte of the present embodiment, at least two exothermal peaks are measured in a thermogravimetric and differential thermal analysis (as measured at a temperature rising rate of 10°C/minute) and the two exothermal peaks preferably have a temperature difference at the peak tops of 20°C or more and 110°C or less. Here, the measurement method of the thermogravimetric and differential thermal analysis in the description herein will be described in the section of Examples.

When the two exothermal peaks are observed in the thermogravimetric and differential thermal analysis, the crystalline sulfide solid electrolyte of the present embodiment is one in which an oxygen atom is incorporated in the structure, that is, a part of a sulfur atom is replaced with an oxygen atom, and thus, achieves a high ionic conductivity with low costs. In addition, when, of the peak tops of the two exothermal peaks in this case, the temperature of the peak top on the lower temperature side is designated as Tc1, and the temperature of the peak top on the higher temperature side is designated as Tc2, the temperature difference (ΔTc=Tc2-Tc1) is preferably 20°C or more and 110°C or less. The lower limit of the temperature difference is preferably 30°C or more, more preferably 35°C or more, further preferably 40°C or more, furthermore preferably 50°C or more, and the upper limit is preferably 100°C or less, more preferably 95°C or less, further preferably 90°C or less, furthermore preferably 75°C or less.

In the thermogravimetric and differential thermal analysis, the temperature (Tc1) of the peak top of the exothermal peak on the lower temperature side is preferably 180°C or higher, more preferably 190°C or higher, further preferably 200°C or higher, furthermore preferably 210°C or higher, and the upper limit is preferably 300°C or lower, more preferably 290°C or lower, further preferably 280°C or lower. The temperature (Tc2) of the peak top of the exothermal peak on the higher temperature side is preferably 200°C or higher, more preferably 220°C or higher, further preferably 240°C or higher, and furthermore preferably 260°C or higher.

(Ionic conductivity)

The ionic conductivity of the crystalline sulfide solid electrolyte of the present embodiment may be 0.70 mS/cm or more, further may be 0.73 mS/cm or more, 0.75 mS/cm or more, 0.80 mS/cm or more, 0.85 mS/cm or more, 0.95 mS/cm or more, 1.0 mS/cm or more, 1.50 mS/cm or more, 2.0 mS/cm or more, or 2.5 mS/cm or more.

Thus, the crystalline sulfide solid electrolyte of the present embodiment has a high ionic conductivity, and even when a raw material containing a halogen atom is used in a small amount, more specifically, even when y in the compositional formula (1) is as low as 10.0 or less, the above ionic conductivity can be achieved.

(Diffraction peaks)

The crystalline sulfide solid electrolyte of the present embodiment preferably has diffraction peaks at $2\theta=20.3\pm0.6°$ and $29.7\pm0.7°$ in X-ray diffractometry using a CuK$\alpha$ line. The peak positions of the diffraction peaks of the crystalline sulfide solid electrolyte of the present embodiment may vary within the range of $\pm0.6°$, $\pm0.7°$, and further within the range of $\pm0.5°$, although differing according to peak position. The measurement method of the X-ray diffractometry using a CuK$\alpha$ line in the description herein will be described in the section of Examples.

Preferred examples of the crystal structure that exhibits diffraction peaks at $2\theta=20.3\pm0.6°$ and $29.7\pm0.7°$ mainly include a thio-LISICON Region II-type crystal structure and an LGPS-type crystal structure. Between the thio-LISICON Region II-type crystal structure and the LGPS-type crystal structure, the intensities of the diffraction peaks appearing at $2\theta=20.3\pm0.6°$ and $29.7\pm0.7°$ are different, and in the thio-LISICON Region II-type crystal structure, the peak intensity of the diffraction peak at $2\theta=20.3\pm0.6°$ is higher than the peak intensity of the diffraction peak at $2\theta=29.7\pm0.7°$, and in the LGPS-type crystal structure, the peak intensity of the diffraction peak at $2\theta=29.7\pm0.7°$ is higher than the peak intensity of the diffraction peak at $2\theta=20.3\pm0.6°$.

The crystalline sulfide solid electrolyte of the present embodiment preferably has at least one crystal structure of the thio-LISICON Region II-type crystal structure and the LGPS-type crystal structure. The crystalline sulfide solid electrolyte of the present embodiment has a composition represented by the specific compositional formula and has a small content of halogen atoms so that y is $0.50\leq y\leq14.0$, but by containing an oxygen atom, the crystalline sulfide solid electrolyte is liable to have a crystal structure that exhibit such a high ionic conductivity. Thus, the crystalline sulfide solid electrolyte of the present embodiment has a high ionic conductivity while achieving reduction in the raw material costs by reducing the content of halogen atoms.

As shown in Examples as described later, the crystalline sulfide solid electrolyte of the present embodiment encompasses one mainly having a thio-LISICON Region II-type crystal structure, one mainly having an LGPS-type crystal structure, and one in which the crystal structures are both present.

Here, regarding "mainly", "mainly having a thio-LISICON Region II-type crystal structure" means that at least one of the diffraction peaks derived from a thio-LISICON Region II-type crystal structure can be found, and "mainly having an LGPS-type crystal structure" means that at least one of the diffraction peaks derived from a LGPS-type crystal structure can be found, and "are both present" means that the diffraction peaks of both the structures can be found or some of the diffraction peaks of the two structures overlap and cannot be separated. As a criteria of the "mainly", for example, when the percentage of a certain crystal structure based on the entire crystal structure is 60% or more, it is said as mainly having the certain crystal structure, and when the percentage is the middle thereof, that is, more than 40% and less than 60%, it is considered as being both present.

Regarding "mainly", when a thio-LISICON Region II-type crystal structure and an LGPS-type crystal structure are both present, the determination can be made by the intensity of a certain diffraction peak. In comparison of the intensity (hereinafter also referred to as "$I_1$") of the diffraction peak at $2\theta=20.3+0.6°$ derived from a thio-LISICON Region II-type crystal structure and the intensity (hereinafter also referred to as "$I_2$") of the diffraction peak at $2\theta=29.7\pm0.7°$ derived from an LGPS-type crystal structure, if $I_1>I_2$, the crystal structure can be determined as mainly having a thio-LISICON Region II-type crystal structure, and if $I_1<I_2$, the crystal structure can be determined as mainly having an LGPS-type crystal structure. If $I_1\fallingdotseq I_2$ (here, "$\fallingdotseq$" means $\pm20\%$ or less), it can be determined that a thio-LISICON Region II-type crystal structure and an LGPS-type crystal structure are both present.

Examples of the thio-LISICON Region II-type crystal structure includes an $Li_{4-x}Ge_{1-x}P_xS_4$-based thio-LISICON Region II-type crystal structure (see Kanno, et. al., Journal of The Electrochemical Society, 148(7)A 742-746 (2001)) and a crystal structure similar to the $Li_{4-x}Ge_{1-x}P_xS_4$-based thio-LISICON Region II-type (see Solid State Ionics, 177 (2006), 2721-2725)).

An example of the LGPS-type crystal structure is a crystal structure having a composition represented by $Li_{3+x}PS_{4-y}O_y$ (x satisfies $-1\leq x\leq1$ and y satisfies $0<y<4$) (also referred to as "Li-P-S-O-based sulfide solid electrolyte").

Here, the designation for a crystal structure of "$Li_{4-x}Ge_{1-x}P_xS_4$-based thio-LISICON Region II (thio-LISICON Region II)-type" means that the crystal structure was found as a crystal structure constituted of Li, Ge, P, and S atoms in the above documents. The sulfide solid electrolyte obtained by the production method of the present embodiment contains a lithium atom, a phosphorus atom, a sulfur atom, and a halogen atom, and therefore, sometimes cannot be represented by a compositional formula of "$Li_{4-x}Ge_{1-x}P_xS_4$" in the "$Li_{4-x}Ge_{1-x}P_xS_4$-based thio-LISICON Region II (thio-LISICON Region II)-type ". However, when it has the same diffraction peaks as those of the "thio-LISICON Region II-type crystal structure" (including the "similar crystal structure"), the sulfide solid electrolyte obtained by the production method of the present embodiment is considered to have a thio-LISICON Region II-type crystal structure formed of a lithium atom, a phosphorus atom, a sulfur atom, and a halogen atom. This applies not only to the thio-LISICON Region II-type crystal structure but also to the LGPS-type crystal structure.

The crystalline sulfide solid electrolyte of the present embodiment preferably has at least one peak of $2\theta=23.9°$ and $38.0°$ as a peak other than the aforementioned diffraction peaks, and more preferably has at least one peak of $2\theta=12.4°$, $14.4°$, and $31.6°$. Since the peaks appear due to an increased crystallinity, the appearance of the peaks results in a higher ionic conductivity. As described above, the positions of the diffraction peaks vary within the range of $\pm0.7°$, $\pm0.6°$, or $\pm0.5°$.

The thio-LISICON Region II-type crystal structure and the LGPS-type crystal structure which the crystalline sulfide solid electrolyte of the present embodiment preferably has can be formed not through an amorphous solid electrolyte (glass component) or can be formed as a so-called glass ceramic which is obtained by heating an amorphous solid electrolyte (glass component) to a crystallization temperature or higher.

From the viewpoint of further enhancing the crystallinity, resulting in a higher ionic conductivity, the crystalline sulfide solid electrolyte of the present embodiment is preferably a glass ceramic.

[Application]

The crystalline sulfide solid electrolyte of the present embodiment, which has a high ionic conductivity even with low costs, and has a superior battery performance, can be suitably used, for example, in an electrode mixture in combination with an electrode active material, or in a lithium ion battery.

When the sulfide solid electrolyte of the present embodiment is used in a lithium ion battery, the sulfide solid electrolyte may be used in a positive electrode layer, in a negative electrode layer, or in an electrolyte layer.

When used in a positive electrode layer, the sulfide solid electrolyte can be used as an electrode mixture that contains the crystalline sulfide solid electrolyte of the present embodiment and a positive electrode active material, and when used in a negative electrode layer, the sulfide solid electrolyte can be used as an electrode mixture that contains the crystalline sulfide solid electrolyte of the present embodiment and a negative electrode active material. In an electrolyte layer, the crystalline sulfide solid electrolyte can be used as it is.

[Electrode mixture]

As described above, the electrode mixture contains the crystalline sulfide solid electrolyte of the present embodiment and an electrode active material. As the electrode active material, a positive electrode active material or a negative electrode active material is adopted according to which of a positive electrode or a negative electrode the electrode mixture is used in.

As the positive electrode active material, any one that can promote a battery chemical reaction accompanied with migration of a lithium ion derived from an atom that is adopted as an atom that induces an ionic conductivity, preferably a lithium atom, in a relation with the negative electrode active material, can be used with no particular limitation. Examples of such a positive electrode active material in which the lithium ion can be inserted and eliminated include an oxide-based positive electrode active material and a sulfide-based positive electrode active material.

Preferred examples of the oxide-based positive electrode active material include lithium-containing transfer metal composite oxides, such as LMO (lithium manganese oxide), LCO (lithium cobalt oxide), NMC (lithium nickel manganese cobalt oxide), NCA (lithium nickel cobalt aluminum oxide), LNCO (lithium nickel cobalt oxide), and an olivine-type compound ($LiMeNPO_4$, Me=Fe, Co, Ni, Mn).

Examples of the sulfide-based positive electrode active material include titanium sulfide ($TiS_2$), molybdenum sulfide ($MoS_2$), iron sulfides ($FeS$, $FeS_2$), copper sulfide ($CuS$), and nickel sulfide ($Ni_3S_2$).

In addition to the above positive electrode active material, niobium selenide ($NbSe_3$) and the like can also be used.

As the positive electrode active material, one kind can be used alone or two or more thereof can be used in combination.

As the negative electrode active material, any one that can promote a battery chemical reaction accompanied with migration of preferably a lithium ion derived from a lithium atom, such as a metal that can form an alloy with an atom that is adopted as an atom that induces an ionic conductivity, preferably a lithium atom, an oxide thereof, or an alloy of the metal and a lithium atom, can be used with no particular limitation. As such a negative electrode active material in which the lithium ion can be inserted and eliminated, those known as a negative electrode active material in the field of batteries can be adopted with no limitation.

As such a negative electrode active material, for example, when it constitutes a lithium ion battery, silicone-based active materials, such as Si, an Si alloy, and silicon oxide; carbon-based active materials, such as graphite and hard carbon; various oxide-based active materials, such as lithium titanate; metal lithium and metal capable of forming an alloy with metal lithium, such as metal lithium, metal indium, metal aluminum, metal silicon, and metal tin, an oxide of the metals, an alloy of the metals and metal lithium, and the like can be used.

A surface of the electrode active material may be coated with a coating layer.

Examples of a material that forms the coating layer include ionic conductors, such as a nitride and an oxide of an atom that induces an ionic conductivity in a sulfide solid electrolyte, preferably a lithium atom, or a composite thereof. Specific examples thereof include lithium nitride ($Li_3N$), a conductor having a LISICON-type crystal structure having $Li_4GeO_4$ as a main structure, such as $Li_{4-2x}Zn_xGeO_4$, a conductor having a thio-LISICON-type crystal structure having a $Li_3PO_4$-type skeleton structure, such as $Li_{4-x}Ge_{1-x}P_xS_4$, a conductor having a perovskite-type crystal structure, such as $La_{2/3-x}Li_{3x}TiO_3$, and a conductor having a NASICON-type crystal structure, such as $LiTi_2(PO_4)_3$.

Examples thereof also include lithium titanates, such as $Li_yTi_{3-y}O_4$ (0<y<3) and $Li_4Ti_5O_{12}$ (LTO), lithium metal oxides of a metal belonging to the Group 5 in the periodic table, such as $LiNbO_3$ and $LiTaO_3$, and $Li_2O-B_2O_3-P_2O_5$-based, $Li_2O-B_2O_3-ZnO$-based, and $Li_2O-Al_2O_3-SiO_2-P_2O_5-TiO_2$-based, and other oxide-based conductors.

An electrode active material having a coating layer is obtained, for example, by applying onto a surface of an electrode active material a solution containing atoms constituting a material for forming the coating layer, and baking the electrode active material after application preferably at 200°C or higher and 400°C or lower.

Here, as the solution containing the atoms, for example, a solution containing various metal alkoxides, such as lithium ethoxide, titanium isopropoxide, niobium isopropoxide, and tantalum isopropoxide, can be used. In this case, as a solvent, an alcohol solvent, such as ethanol or butanol, an aliphatic hydrocarbon solvent, such as hexane, heptane, or octane; or an aromatic hydrocarbon solvent, such as benzene, toluene, or xylene, can be used.

The application can be performed by dipping, spray coating, or the like.

The baking temperature is, from the viewpoint of enhancing production efficiency and battery performance, preferably 200°C or higher and 400°C or lower as described above, more preferably 250°C or higher and 390°C or lower, and the baking time is generally approximately 1 minute to 10 hours, and preferably 10 minutes to 4 hours.

The coating ratio with the coating layer based on the surface area of the electrode active material is preferably 90% or more, more preferably 95% or more, further preferably 100%, that is, it is preferred that the entire surface is coated. The thickness of the coating layer is preferably 1 nm or more, more preferably 2 nm or more, and the upper limit is preferably 30 nm or less, more preferably 25 nm or less.

The thickness of the coating layer can be measured by sectional observation with a transmission electron microscope (TEM) and the coating ratio can be calculated from the thickness of the coating layer, the elemental analysis values, and the BET specific surface area.

(Other components)

The electrode mixture may contain, in addition to the crystalline sulfide solid electrolyte of the present embodiment and the electrode active material, other components, such as a conductive material and a binder. In other words, in the electrode mixture, in addition to the crystalline sulfide solid electrolyte of the present embodiment and the electrode active material, other components, such as a conductive material and a binder, may be used. The other components, such as a conductive material and a binder, can be used, in mixing the crystalline sulfide solid electrolyte and the electrode active material, by further adding the other components to the crystalline sulfide solid electrolyte and the electrode active material, followed by mixing.

Examples of the conductive material include, from the viewpoint of enhancing the battery performance by increasing an electroconductivity, carbon-based materials, such as artificial graphite, graphite carbon fiber, resin baked carbon, thermal decomposition vaper-phase growth carbon, coke, mesocarbon microbead, furfuryl alcohol resin baked carbon, polyacene, pitch-based carbon fiber, vapor-phase growth carbon fiber, natural graphite, and graphitization-resistant carbon.

By using a binder, the strength of a positive electrode or a negative electrode produced is increased.

The binder is not particularly limited as long as the effects, such as binding ability and softness, can be imparted, and examples thereof include fluorine-based polymers, such as polytetrafluoroethylene and polyvinylidene fluoride, thermoplastic elastomers, such as a butylene rubber and a styrene-butadiene rubber, and various resins, such as an acrylic resin, an acrylic polyol resin, a polyvinyl acetal resin, a polyvinyl butyral resin, and a silicone resin.

The blending ratio (mass ratio) of the electrode active material and the crystalline sulfide solid electrolyte in the electrode mixture is, in view of enhancing the battery performance and production efficiency, preferably 99.5:0.5 to 40:60, more preferably 99:1 to 50:50, and further preferably 98:2 to 60:40.

When a conductive material is contained, the content of the conductive material in the electrode mixture is not particularly limited, but, in view of enhancing the battery performance and production efficiency, is preferably 0.5% by mass or more, more preferably 1% by mass or more, further preferably 1.5% by mass or more, and the upper limit is preferably 10% by mass or less, preferably 8% by mass or less, further preferably 5% by mass or less.

When a binder is contained, the content of the binder in the electrode mixture is not particularly limited, but, in view of enhancing the battery performance and production efficiency, is preferably 1% by mass or more, more preferably 3% by mass or more, further preferably 5% by mass or more, and the upper limit is preferably 20% by mass or less, preferably 15% by mass or less, further preferably 10% by mass or less.

[Lithium ion battery]

The crystalline sulfide solid electrolyte of the present embodiment can be used in a lithium ion battery as described above. For example, the lithium ion battery can contain at least one selected from the sulfide solid electrolyte of the present embodiment and the electrode mixture.

The lithium ion battery is not particularly limited about the configuration as long as it contains the crystalline sulfide solid electrolyte of the present embodiment or an electrode mixture containing the crystalline sulfide solid electrolyte of the present embodiment, and has a configuration of a generally used lithium ion battery.

The lithium ion battery is preferably, for example, one that includes a positive electrode layer, a negative electrode layer, an electrolyte layer, and a collector. The positive electrode layer and the negative electrode layer are preferably those in which an electrode mixture containing the crystalline sulfide solid electrolyte of the present embodiment is used, and the electrolyte layer is preferably one in which the crystalline sulfide solid electrolyte of the present embodiment is used.

As the collector, a known one can be used. For example, a layer in which a substance that reacts with the solid electrolyte, such as Au, Pt, Al, Ti, or, Cu, is coated with Au and the like can be used.

(Method for producing crystalline sulfide solid electrolyte)

A method for producing the crystalline sulfide solid electrolyte of the present embodiment will be described. The crystalline sulfide solid electrolyte of the present embodiment can be obtained, for example, by a production method including mixing a raw material-containing substance that contains a lithium atom, a sulfur atom, a phosphorus atom, an oxygen atom, and a halogen atom.

(Raw material-containing substance)

A raw material-containing substance contains a lithium atom, a phosphorus atom, a sulfur atom, an oxygen atom, and a halogen atom. The raw material-containing substance is more specifically a substance that contains a material containing one or more selected from the group consisting of these atoms (hereinafter also referred to as "raw material"), and preferably a substance that contains two or more raw materials.

Typical preferred examples of the raw material include raw materials containing at least two kinds of atom selected from the above atoms, for example, lithium sulfide; phosphorus sulfides, such as diphosphorus trisulfide ($P_2S_3$) and diphosphorus tetrasulfide ($P_2S_5$); and raw materials constituted of one kind of atom selected from the above atoms, such as elemental phosphorus and elemental sulfur.

Among the above materials, lithium sulfide and a phosphorus sulfide, such as diphosphorus trisulfide ($P_2S_3$) or diphosphorus tetrasulfide ($P_2S_5$), are preferred, and among phosphorus sulfides, diphosphorus tetrasulfide ($P_2S_5$) is preferred.

Another preferred raw material is a material containing a halogen atom. Typical preferred examples thereof include lithium halides, such as lithium fluoride, lithium chloride, lithium bromide, and lithium iodide; and elemental halogens, such as fluorine ($F_2$), chlorine ($Cl_2$), bromine ($Br_2$), and iodine ($I_2$).

Another preferred example of the raw material is a material containing an oxygen atom. Typical preferred examples thereof include diphosphorus pentoxide ($P_2O_5$), lithium oxide ($Li_2O$), and lithium hydroxide (LiOH). Among them, in view of easy replacement of a part of a sulfur atom in the structure of the crystalline sulfide solid electrolyte with an oxygen atom, diphosphorus pentoxide ($P_2O_5$) is preferred.

Examples of the raw material include a material containing at least one kind of atom selected from at least a lithium atom, a phosphorus atom, a sulfur atom, an oxygen atom, and a halogen atom, for example, phosphorus halides, such as various phosphorus fluorides ($PF_3$, $PF_5$), various phosphorus chlorides ($PCl_3$, $PCl_5$, $P_2Cl_4$), various phosphorus bromides ($PBr_3$, $PBr_5$), and various phosphorus iodides ($PI_3$, $P_2I_4$); thiophosphoryl halides, such as thiophosphoryl fluoride ($PSF_3$), thiophosphoryl chloride ($PSCl_3$), thiophosphoryl bromide ($PSBr_3$), thiophosphoryl iodide ($PSI_3$), thiopho-

sphoryl dichloride fluoride ($PSCl_2F$), and thiophosphoryl dibromide fluoride ($PSBr_2F$); lithium compounds, such as lithium oxide, lithium hydroxide, and lithium carbonate; alkali metal sulfides, such as sodium sulfide, potassium sulfide, rubidium sulfide, and cesium sulfide; metal sulfides, such as silicon sulfide, germanium sulfide, boron sulfide, gallium sulfide, tin sulfides ($SnS$, $SnS_2$), aluminum sulfide, and zinc sulfide; phosphorus compounds, such as sodium phosphorate and lithium phosphorate; halides of an alkali metal other than lithium, for example, sodium halides, such as sodium iodide, sodium fluoride, sodium chloride, and sodium bromide; metal halides, such as aluminum halides, silicon halides, germanium halides, arsenic halides, selenium halides, tin halides, antimony halides, tellurium halides, and bismuth halides; and phosphorus oxyhalides, such as phosphorus oxychloride ($POCl_3$) and phosphorus oxybromide ($POBr_3$).

In addition, a material that acts as a solid electrolyte, such as $Li_3PS_4$ which contains a $PS_4$ structure or $Li_7P_3S_{11}$, can also be used as a raw material. For example, when $Li_3PS_4$ is used as a raw material, for example, lithium sulfide and diphosphorus pentasulfide are used to prepare $Li_3PS_4$ in advance, which can be used as a raw material.

A raw material, such as lithium sulfide, is preferably in a particle form. Such a raw material is easily mixed when raw materials are mixed, which enables easy production of a crystalline sulfide solid electrolyte.

The average particle diameter ($D_{50}$) of particles of a raw material can be, in view of a reaction, handleability, and the like of the raw material, for example, 0.1 μm or more and 1000 μm or less, 0.5 μm or more and 100 μm or less, or 1 μm or more and 20 μm or less. In the description herein, the average particle diameter ($D_{50}$) is a particle diameter to reach 50% (volume basis) of all of the particles in sequential cumulation from particles of the smallest particle size in drawing a particle size distribution cumulative curve, and the volumetric distribution is an average particle diameter which can be measured, for example, using a laser diffraction/scattering particle size distribution analyzer.

In the crystalline sulfide solid electrolyte of the present embodiment, the raw materials described above can be appropriately combined to form a composition represented by the compositional formula (1) and be used. Note that the composition represented by the compositional formula (1) of the crystalline sulfide solid electrolyte of the present embodiment can be found by ICP - atomic emission spectrometer as described above, but there may arise a shift between the true composition and measured values because of containing an oxygen atom. In this case, since it has been confirmed that there arises almost no shift between materials used as raw materials and the blending ratio thereof and the composition calculated from the materials and the blending ratio thereof, the composition can also be considered as the composition calculated from the materials used as raw materials and the blending ratio thereof.

When lithium sulfide and diphosphorus pentasulfide are used as raw materials, the proportion of lithium sulfide based on the sum of lithium sulfide and diphosphorus pentasulfide is, from the viewpoint of achieving a higher ionic conductivity, preferably 45.0% by mole or more, more preferably 60.0% by mole or more, further preferably 67.0% by mole or more, furthermore preferably 70.0% by mole or more, particularly preferably 73.0% by mole or more, and the upper limit is preferably 85.0% by mole or less, more preferably 82.0% by mole or less, further preferably 80.0% by mole or less, furthermore preferably 77.0% by mole or less. The numerical value range thereof is typically preferably 45.0 to 85.0% by mole, 55.0 to 85.0% by mole, 65.0 to 85.0% by mole, 67.0 to 85.0% by mole, 70.0 to 85.0% by mole, 73.0 to 85.0% by mole, 55.0 to 82.0% by mole, 65.0 to 82.0% by mole, 67.0 to 82.0% by mole, 70.0 to 82.0% by mole, 73.0 to 82.0% by mole, 73.0 to 80.0% by mole, or 73.0 to 77.0% by mole.

When the raw material-containing substance contains diphosphorus pentasulfide and diphosphorus pentoxide as a raw material containing an oxygen atom, the proportion of diphosphorus pentoxide based on the sum thereof is, from the viewpoint of achieving a higher ionic conductivity and reduction in the raw material costs, preferably 0.1% by mole or more, more preferably 0.5% by mole or more, further preferably 1.0% by mole or more, furthermore preferably 1.8% by mole or more, and the upper limit is preferably 22.0% by mole or less, more preferably 18.0% by mole or less, further preferably 12.0% by mole or less, furthermore preferably 8.0% by mole or less.

The numerical value range thereof is typically preferably 0.1 to 22.0% by mole, 0.1 to 18.0% by mole, 0.1 to 12.0% by mole, 0.1 to 8.0% by mole, 0.5 to 22.0% by mole, 0.5 to 18.0% by mole, 0.5 to 12.0% by mole, 0.5 to 8.0% by mole, 1.0 to 22.0% by mole, 1.0 to 18.0% by mole, 1.0 to 12.0% by mole, 1.0 to 8.0% by mole, 1.8 to 22.0% by mole, 1.8 to 18.0% by mole, 1.8 to 12.0% by mole, or 1.8 to 8.0% by mole.

When the raw material-containing substance contains lithium sulfide, diphosphorus pentasulfide, a lithium halide, a raw material containing an oxygen atom, and another raw material which is used according to the need, the content of lithium sulfide and diphosphorus pentasulfide based on the sum thereof is preferably 60.0% by mole or more, more preferably 70.0% by mole or more, further preferably 80.0% by mole or more, furthermore preferably 85.0% by mole or more, and the upper limit is preferably less than 100% by mole, more preferably 95.0% by mole or less, further preferably 90.0% by mole or less.

When the raw material-containing substance contains lithium sulfide, diphosphorus pentasulfide, a lithium halide, a raw material containing an oxygen atom, and anther raw material which is used according to the need, the content of the lithium halide based on the sum of lithium sulfide, diphosphorus pentasulfide, the lithium halide, and the raw material containing an oxygen atom is preferably 0.1% by mole or more, more preferably 1.0% by mole or more, further preferably 1.5% by mole or more, furthermore preferably 4.5% by mole or more, particularly preferably 7.5% by mole or more, and the upper limit is preferably 14.0% by mole or less, more preferably 13.5% by mole or less, further preferably 13.0% by mole or less, furthermore preferably 12.7% by mole or less.

(Mixing)

A method for mixing a raw material-containing substance containing a lithium atom, a sulfur atom, a phosphorus atom, an oxygen atom, and a halogen atom is not particularly limited as long as, for example, the raw materials can be mixed. For example, mixing can be performed by using a pulverizer, a mixer, or an agitator.

When a pulverizer is used, pulverization of raw materials occurs and mixing thereof also occurs at the same time. Mixing of raw materials may also occur with a mixer and an agitator. Accordingly, it is said that the crystalline sulfide solid electrolyte of the present embodiment can be produced by a treatment of agitation, mixing, or pulverization, or any combination thereof of preferably two or more raw materials selected from materials containing at least one of a lithium atom, a sulfur atom, a phosphorus atom, an oxygen atom, and a halogen atom.

An example of the agitator and mixer is a mechanical agitation-style mixer in which an impeller is provided in a reaction tank for agitation (mixing by agitation, which can be also referred to as agitation-mixing). Examples of the mechanical agitation-style mixer include a high-speed agitation-type mixer and a double arm-type mixer. Examples of the high-speed agitation-type mixer include a vertical axis rotation-type mixer and a horizontal axis rotation-type mixer, and a mixer of either type may be used.

Examples of the shape of the impeller used in the mechanical agitation-style mixer include a blade type, an arm type, an anchor type, a paddle type, a full-zone type, a ribbon type, a multistep blade type, a double arm type, a shovel type, a twin-shaft blade type, a flat blade type, and a C-type blade type. From the viewpoint of more efficiently promoting the reaction of the raw materials, a shovel type, a flat blade type, a C-type blade type, an anchor type, a paddle type, a full-zone type, and the like are preferred, and an anchor type, a paddle type, and a full-zone type are more preferred.

When a mechanical agitation-style mixer is used, the rotation number of the impeller can be appropriately adjusted according to the volume and temperature of the fluid in the reaction tank, the shape of the impeller, and the like and is not particularly limited, but, generally can be 5 rpm or more and 400 rpm or less, and from the viewpoint of more efficiently promoting the reaction of the raw materials, is preferably 10 rpm or more and 300 rpm or less, more preferably 15 rpm or more and 250 rpm or less, and further preferably 20 rpm or more and 200 rpm or less.

The temperature condition in mixing with a mixer or the like is not particularly limited, and, for example, is generally -30 to 120°C, preferably -10 to 100°C, more preferably 0 to 80°C, and further preferably 10 to 60°C. The mixing time is generally 0.1 to 500 hours, and from the viewpoint of making the dispersion state of the raw materials uniform to promote the reaction, is preferably 1 to 450 hours, more preferably 10 to 425 hours, further preferably 20 to 400 hours, and furthermore preferably 40 to 375 hours.

A method for performing mixing with pulverization using a pulverizer is a method that has conventionally been adopted as a solid phase method (mechanical milling method). As the pulverizer, for example, a medium-style pulverizer using a pulverization medium can be used.

Medium-style pulverizers are roughly divided into vessel driving-style pulverizers and media agitation-style pulverizers. Examples of the vessel driving-style pulverizers include a ball mill and a bead mill which include an agitation tank, a pulverizing tank, or a combination thereof. Examples of the media agitation-style pulverizers include impact-style pulverizers, such as a cutter mill, a hummer mill, and a pin mill; a tower-type pulverizer, such as a tower mill; agitation tank-type pulverizers, such as an attritor, an aquamizer, and a sand grinder; flow tank-type pulverizers, such as a viscomill and a pearl mill; a flow tube-type pulverizer; an annular-type pulverizer, such as a coball mill; a continuous dynamic-type pulverizer; and other various pulverizers such as a single screw or multi-screw kneader. Among them, in view of easy adjustment of the particle size of the resulting sulfide, a ball mill and a bead mill exemplified as a vessel driving-style pulverizer are preferred, and above all, those of a planetary type are preferred.

The pulverizer can be appropriately selected according to the desired scale and the like. In the case of a relatively small scale, a vessel driving-style pulverizer, such as a ball mill or a bead mill, can be used, and in the case of a large scall or mass production, a pulverizer of another style may be used.

As described later, in the case of a liquid state or a slurry state containing a liquid such as a solvent in mixing, a wet pulverizer which can be adapted to wet pulverization is preferably used.

Typical examples of the wet pulverizer include a wet bead mill, a wet ball mill, and a wet vibration mill, and in points of capability of freely adjusting conditions of pulverization operation and being easily adapted to a smaller particle size, a wet bead mill which uses beads as pulverization media is preferred. A dry pulverizer, for example, a dry media-style pulverizer, such as a dry bead mill, a dry ball mill, or a dry vibration mill, or a dry non-media pulverizer, such as a jet mill, can also be used.

When the object to be mixed is in a liquid state or a slurry state, a flow-style pulverizer in which a circulation operation can be adopted as needed can also be used. A specific example thereof is a pulverizer having a form in which a slurry is circulated between a pulverizer (pulverization mixer) and a temperature keeping tank (reaction vessel).

When a ball mill or a bead mill is used, the rotation number cannot be completely defined because it depends on the scale of the treatment, the time for pulverization, and the like, but is generally 10 rpm or more, preferably 20 rpm or more, more preferably 50 rpm or more, further preferably 100 rpm or more, and the upper limit is generally 1,000 rpm or less, preferably 900 rpm or less, more preferably 800 rpm or less, further preferably 700 rpm or less, furthermore preferably 500 rpm or less.

The time for pulverization in this case cannot be completely defined because it depends on the scale of the treatment, the rotation number, and the like, but is generally 0.5 hours or more, preferably 1 hour or more, more preferably 5 hours or more, further preferably 10 hours or more, furthermore preferably 20 hours or more, particularly preferably 25 hours or more, more particularly preferably 30 hours or more, and the upper limit is generally 100 hours or less, preferably 72 hours or less, more preferably 48 hours or less. When the time for pulverization is within the above range, the atoms contained in the raw materials, above all, an oxygen atom and a halogen atom are more efficiently uniformly dispersed, and thus, a high ionic conductivity is liable to be achieved.

By selecting the size and material of the media (beads, balls) used, the rotation number of a rotor, the time, and the like, a treatment of mixing, agitation, pulverization, or any combination thereof can be performed and the particle size and the like of the resulting crystalline sulfide solid electrolyte can be adjusted.

(Solvent)

In mixing as described above, a solvent can be added to the raw materials, followed by mixing. As the solvent, a wide variety of solvents referred to as organic solvents and the like can be used.

As the solvent, solvents that have conventionally been used in producing solid electrolytes can be widely used, and examples thereof include hydrocarbon solvents, such as an aliphatic hydrocarbon solvent, an alicyclic hydrocarbon solvent, and an aromatic hydrocarbon solvent.

Examples of the aliphatic hydrocarbon include hexane, pentane, 2-ethylhexane, heptane, octane, decane, undecane, dodecane, and tridecane, examples of the alicyclic hydrocarbon include cyclohexane and methylcyclohexane, and examples of the aromatic hydrocarbon solvent include benzene, toluene, xylene, mesitylene, ethylbenzene, tert-butylbenzene, trifluoromethylbenzene, and nitrobenzene.

In addition to the hydrocarbon solvents, solvents containing an atom other than a carbon atom and a hydrogen atom, for example, a hetero atom, such as a nitrogen atom, an oxygen atom, a sulfur atom, or a halogen atom are also exemplified. Such a solvent has a nature of easily forming a complex with, for example, a raw material containing a lithium atom, a phosphorus atom, a sulfur atom, an oxygen atom, and a halogen atom used as a raw material (hereinafter, such a solvent is also referred to as "complexing agent"), and has a nature of easily retaining a halogen atom in a structure of a sulfide solid electrolyte, and thus, is useful in point of achieving a higher ionic conductivity. Preferred examples of the complexing agent include an ether solvent, an ester solvent, an alcohol solvent, an aldehyde solvent, and a ketone solvent, which contain an oxygen atom as a hetero atom. When such a complexing agent is used, a reaction of raw materials can be promoted with a mixer or an agitator without performing a treatment with a pulverizer.

Preferred examples of the ether solvent include aliphatic ethers, such as dimethyl ether, diethyl ether, tert-butyl methyl ether, dimethoxymethane, dimethoxyethane, diethylene glycol dimethyl ether (diglyme), triethylene oxide glycol dimethyl ether (triglyme), diethylene glycol, and triethylene glycol; alicyclic ethers, such as ethylene oxide, propylene oxide, tetrahydrofuran, tetrahydropyran, dimethoxytetrahydrofuran, cyclopentyl methyl ether, and dioxane; heterocyclic ethers, such as furan, benzofuran, and benzopyran; and aromatic ethers, such as methyl phenyl ether (anisole), ethyl phenyl ether, dibenzyl ether, and diphenyl ether.

Preferred examples of the ester solvent include aliphatic esters, such as methyl formate, ethyl formate, methyl acetate, ethyl acetate, propyl acetate, isopropyl acetate; methyl propionate, ethyl propionate, dimethyl oxalate, diethyl oxalate, dimethyl malonate, diethyl malonate, dimethyl succinate, and diethyl succinate; alicyclic esters, such as methyl cyclohexanecarboxylate, ethyl cyclohexanecarboxylate, and dimethyl cyclohexanedicarboxylate; heterocyclic esters, such as methyl pyridinecarboxylate, methyl pyrimidinecarboxylate, acetolactone, propiolactone, butyrolactone, and valerolactone; and aromatic esters, such as methyl benzoate, ethyl benzoate, dimethyl phthalate, diethyl phthalate, butyl benzyl phthalate, dicyclohexyl phthalate, trimethyl trimellitate, and triethyl trimellitate.

Preferred examples thereof include alcohol solvents, such as ethanol and butanol; aldehyde solvents, such as formaldehyde, acetaldehyde, and dimethylformamide; and ketone solvents, such as acetone and methyl ethyl ketone.

Examples of the solvent containing a nitrogen atom as a hetero atom include solvents having a nitrogen atom-containing group, such as an amino group, an amide group, a nitro group, and a nitril group.

Preferred examples of the solvent having an amino group include aliphatic amines, such as ethylenediamine, diaminopropane, dimethylethylenediamine, diethylethylenediamine, dimethyldiaminopropane, tetramethyldiaminomethane, tetramethylethylenediamine (TMEDA), and tetramethyldiaminopropane (TMPDA); alicyclic amines, such as cyclopropanediamine, cyclohexanediamine, and bisaminomethylcyclohexane; heterocyclic amines, such as isophoronediamine, piperazine, dipiperidylpropane, and dimethylpiperazine; and aromatic amines, such as phenyl diamine, tolylenediamine, naphthalenediamine, methylphenylenediamine, dimethylnaphthalenediamine, dimethylphenylenediamine, tetramethylphenylenediamine, and tetramethylnaphthalenediamine.

Preferred examples thereof also include nitrile solvents, such as acetonitrile and acrylonitrile; and solvents containing a nitrogen atom, such as dimethylformamide, nitrobenzene, and dimethylacetamide.

Preferred examples of the solvent containing a halogen atom as a hetero atom include chloroform, carbon tetrachloride, dichloromethane, chlorobenzene, dichlorobenzene, trifluoromethylbenzene, chlorotoluene, and bromobenzene.

Preferred examples of the solvent containing a sulfur atom include dimethyl sulfoxide and carbon disulfide.

When a solvent is used, the amount of the solvent used relative to 1 kg of the total amount of the raw materials is preferably 100 mL or more, more preferably 200 mL or more, further preferably 250 mL or more, furthermore preferably 300 mL or more, and the upper limit is preferably 3000 mL or less, more preferably 2500 mL or less, further preferably 2000 mL or less, furthermore preferably 1550 mL or less. When the amount of the solvent used is within the above range, raw materials can be efficiently reacted.

(Drying)

When mixing is performed using a solvent, drying a fluid (generally, slurry) obtained by mixing may be included after mixing. When a complexing agent is used as the solvent, by removing the complexing agent from a complex containing the complexing agent, and when a complexing agent and a solvent is used in combination, by removing the complexing agent from a complex containing the complexing agent and removing the solvent, and when a solvent other than a complexing agent is used, by removing the solvent, a sulfide solid electrolyte can be obtained.

Drying can be performed on the fluid obtained by mixing at a temperature according to the type of the solvent. For example, drying can be performed at a temperature of the boiling point of the complexing agent or higher.

Drying can be performed by volatilizing the complexing agent, and the solvent used according to the need, by performing drying under a reduced pressure (vacuum drying) using a vacuum pump or the like generally at 5 to 100°C, preferably at 10 to 85°C, more preferably at 15 to 70°C, and furthermore preferably at approximately the room temperature (for example, 23°C) (for example, approximately the room temperature $\pm$ 5°C).

Drying may be performed on a fluid through filtration using a glass filter or the like, solid-liquid separation by decantation, or solid-liquid separation using a centrifuge or the like. When a solvent other than a complexing agent is used, a sulfide solid electrolyte can be obtained through solid-liquid separation. In addition, when a complexing agent is used as a solvent, the complexing agent incorporated in a complex can be removed by performing solid-liquid separation, followed by drying under the above temperature condition.

Specifically, solid-liquid separation can be easily performed by transferring the fluid into a container, and after a sulfide (or a complex when a complexing agent is contained (which can be referred to as a precursor of a sulfide solid electrolyte) precipitates, performing decantation for removing the complexing agent and the solvent as the supernatant or filtration using, for example, a glass filter having a pore size of approximately 10 to 200 $\mu$m, preferably 20 to 150 $\mu$m.

Drying may be performed after mixing and before a hydrogen treatment described later, or may be performed after a hydrogen treatment.

The sulfide solid electrolyte obtained after the mixing, or when a solvent is used, the sulfide solid electrolyte obtained after removal of the solvent by the drying exhibits an ionic conductivity caused by a lithium atom.

The sulfide solid electrolyte obtained after the mixing is basically an amorphous sulfide solid electrolyte (glass component) unless the mixing is performed, for example, by pulverization using a pulverizer to the extent that the sulfide solid electrolyte is crystallized.

The sulfide solid electrolyte obtained after the mixing may be an amorphous sulfide solid electrolyte (glass component) or may be a crystalline sulfide solid electrolyte, which can be appropriately selected as desired. When a crystalline sulfide solid electrolyte is to be produced, an amorphous sulfide solid electrolyte obtained by the mixing can be converted to a crystalline sulfide solid electrolyte by heating.

The sulfide solid electrolyte may encompass a crystalline sulfide solid electrolyte on the surface of which an amorphous component (glass component) is formed, for example, as a result of a treatment, such as a pulverization described later, for adjusting the particle size of a crystalline sulfide solid electrolyte powder. Accordingly, a sulfide solid electrolyte containing an amorphous component encompasses an amorphous sulfide solid electrolyte and a sulfide solid electrolyte which is a crystalline sulfide solid electrolyte on the surface of which an amorphous component is formed.

(Heating)

When the crystalline sulfide solid electrolyte of the present embodiment is to be produced, heating may further be included. When an amorphous sulfide solid electrolyte (glass component) is obtained by the mixing, a crystalline sulfide solid electrolyte is obtained by heating, and when a crystalline sulfide solid electrolyte is obtained, a crystalline sulfide solid electrolyte having a further enhanced crystallinity is obtained. In either of the cases, by heating, the obtained sulfide solid electrolyte can be a crystalline sulfide solid electrolyte and the ionic conductivity can be enhanced.

In addition, when a complexing agent is used as a solvent in mixing, a complex containing the complexing agent is formed. The complexing agent can be removed from the complex to obtain a sulfide solid electrolyte also by heating without performing the drying, and depending on the conditions of the heating, the resulting sulfide solid electrolyte can be amorphous or crystalline.

The heating temperature can be determined according to the structure of the crystalline sulfide solid electrolyte. Specifically, an amorphous sulfide solid electrolyte corresponding to the crystalline sulfide solid electrolyte to be produced is subjected to a differential thermal analysis (DTA) using a differential thermal analyzer (DTA apparatus) at a temperature rising condition of 10°C/minute, and based on the temperature of the peak top of the exothermal peak observed on the lowest temperature side, the heating temperature can be in the range of preferably 5°C or higher, more preferably 10°C or higher, further preferably 20°C or higher, and the upper limit is not particularly limited, but can be approximately 40°C or lower. Within the temperature range, a crystalline sulfide solid electrolyte can be more efficiently and more securely obtained. The heating temperature for obtaining a crystalline sulfide solid electrolyte cannot be completely defined because it depends on the composition and structure of the resulting crystalline sulfide solid electrolyte, but is generally preferably 130°C or higher, more preferably 135°C or higher, further preferably 140°C or higher, and the upper limit is not particularly limited, but is preferably 300°C or lower, more preferably 250°C or lower, further preferably 200°C or lower.

The heating time is not particularly limited as long as a desired amorphous sulfide solid electrolyte and crystalline sulfide solid electrolyte can be obtained, and, for example, is preferably 1 minute or more, more preferably 10 minutes or more, further preferably 30 minutes or more, and furthermore preferably 1 hour or more. The upper limit of the heating time is not particularly limited, but is preferably 24 hours or less, more preferably 10 hours or less, further preferably 5 hours or less, and furthermore preferably 3 hours or less.

The heating is preferably performed in an inert gas atmosphere (for example, a nitrogen atmosphere or an argon atmosphere), or in a reduced pressure atmosphere (particularly in vacuum). For example, an inert gas atmosphere containing a certain concentration of hydrogen may be adoptable. This is because degradation (for example, oxidation) of a crystalline sulfide solid electrolyte can be prevented.

The method of heating is not particularly limited, and examples thereof include methods in which a hot plate, a vacuum heater, an argon gas atmosphere furnace, or a baking furnace is used. In addition, in industrial use, a horizontal-type dryer having a heating means and a feed mechanism, a horizontal-type vibration fluid dryer, and the like can also be used, which can be selected according to the amount to be heated.

Examples

Next, the present invention will be specifically described with reference to examples, but the present invention is not to be limited to the examples.

(Measurement of ionic conductivity)

In Examples, the ionic conductivity was measured as follows.

Each of the crystalline solid electrolytes obtained in Examples and Comparative Examples was molded into a circular palette having a diameter of 10 mm (sectional area S: 0.785 cm$^2$) and a height (L) of 0.1 to 0.3 cm to produce a specimen. Electrode terminals were attached to the top and the bottom of the specimen, and measurement was performed at 25°C by an alternating current impedance method (frequency range: 7 MHz to 0.1 Hz, amplitude: 10 mV) to provide a Cole-Cole plot. In the vicinity of the right end of an arc observed in a region on the high frequency side, the real part Z' ($\Omega$) at the point where -Z" ($\Omega$) was minimized was designated as the bulk resistance R ($\Omega$) of the electrolyte, and the ionic conductivity $\sigma$ (S/cm) was calculated according to the following expressions.

$$R = \rho \, (L/S)$$

$$\sigma = 1/\rho$$

(X-Ray diffraction measurement (powdery XRD diffraction measurement))

The powdery X-ray diffraction (XRD) measurement was performed as follows.

Each of the solid electrolyte powders produced in Examples and Comparative Examples was charged into a groove having a diameter of 20 mm and a depth of 0.2 mm and was leveled with glass to prepare a sample. This sample was sealed with a Kapton film for XRD and subjected to measurement without contact with air. The measurement was performed with a powdery X-ray diffractometer ("D2 PHASER (model number)", manufactured by Bruker Japan K.K.) under the following conditions.

Tube voltage: 30 kV
Tube current: 10 mA
X-ray wavelength: Cu-K$\alpha$ line (1.5418 Å)
Optical system: focusing method
Slit configuration: solar slit 4° (both for incident side and light receiving side), divergence slit 1 mm, K$\beta$ filter (Ni plate 0.5%), using air scatter screen of 3 mm)
Detector: semiconductor detector
Measurement range: $2\theta$ = 10-60 deg
Step width, scanning speed: 0.05 deg, 0.05 deg/second

A peak appearing at $2\theta$=20.3° and a peak appearing at $2\theta$=29.7° were identified in an XRD pattern obtained.

(Thermogravimetric and differential thermal analysis (measurement of TG-DTA))

Thermogravimetric and differential thermal analysis (TG-DTA) was performed using a thermogravimetric and differential thermal analyzer (TG-DTA apparatus) ("TGA/DSC3+ (model number)", manufactured by METTLER TOLEDO). In the measurement, a sample (approximately 10 mg or more and 20 mg or less) was charged in an Al pan and under $N_2$ atmosphere, the temperature was raised from 30°C at a temperature rising rate of 10°C/minute, and in the resulting DTA curve, of temperatures at which exothermal peaks were observed, the temperature at the peak top of an exothermal peak on the lower temperature side was designated as Tc1(°C) and the temperature at the peak top of an exothermal peak on the higher temperature side was designated as Tc2(°C). The temperature difference $\Delta$Tc (=Tc2-Tc1) between the peak tops of the two exothermal peaks was calculated.

(Solid $^{31}$P-NMR measurement)

The measurement was performed with the following apparatus under the following condition.

Apparatus: ECZ400R (manufactured by JEOL, Ltd.)
Observed nucleus: $^{31}$P
Observation frequency: 161.994 MHz
Measurement temperature: room temperature
Pulse sequence: single pulse
90° pulse width: 3.2 $\mu$s
Wait time until next pulse application after FID measurement: 60 s
Rotation number of MAS (magic angle spinning): 11 kHz
Cumulated number: 64
Measurement range: 250 ppm to -150 ppm
Amount of sample: 100 mg
External standard: $NH_4H_2PO_4$ (chemical shift: 1.00 ppm)

Peak separation

When peaks were to be separated, an obtained solid $^{31}$P-NMR spectrum is analyzed using a software "FT-NMR" (software included in "Data Processing of FT-NMR by PC", revised edition (second edition), (SANKYO SHUPPAN) to determine separated peaks.
The software calculates, from NMR signals (experimental values), separated peaks, the calculated values of the NMR signals, and the residual sum of squares R2 using the nonlinear least-squares method. With the height of the highest peak taken as 1, when the residual sum of squares R2 within the analysis range of the experimental values and the calculated values is 0.007 or less and the number of the separated peaks is the least, the peak separation is completed.

Example 1

A raw material-containing substance (1.5 g in total) containing lithium sulfide, diphosphorus pentasulfide, diphosphorus pentoxide, lithium bromide, and lithium iodide which were weighed so as to give a molar ratio of 65.62 : 21.44 : 0.44 : 6.25 : 6.25 was put in a zirconia pot of 45 ml of a planetary ball mill (manufactured by Fritsch Japan Co.,Ltd, model number P-7) together with ten 10-mm diameter zirconia balls (about 32 g) under a nitrogen atmosphere, and the pot was completely sealed to make the interior thereof under an inert atmosphere (nitrogen atmosphere). Without heating or cooling (at room temperature), mechanical milling was performed at a rotation number of the planetary ball mill of 370 rpm for 40 hours. The resulting powdery product (amorphous sulfide solid electrolyte) was subjected to the thermogravimetric and differential thermal analysis, and then, the temperature Tc1 of the peak top of an exothermal peak on the lower temperature side was 215°C, the temperature Tc2 of the peak top of an exothermal peak on the higher temperature side was 266°C, and thus, △Tc was 51°C. The product was heated at 215°C which was Tc1 in an inert atmosphere (nitrogen atmosphere) for 2 hours, thereby obtaining a crystalline sulfide solid electrolyte.

In the obtained crystalline sulfide solid electrolyte, x, y, and z in the compositional formula (1) are 0.01250, 12.5000, and 0.0000, respectively, and x×y is 0.15625.

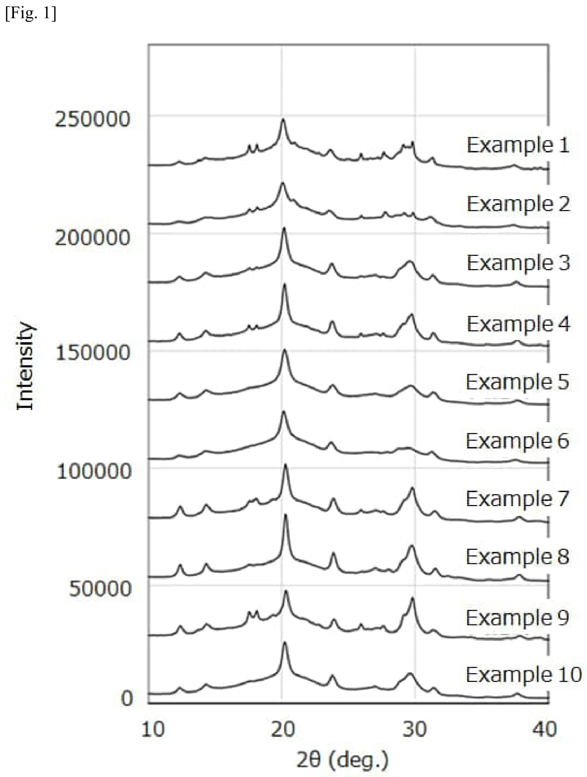

The ionic conductivity of the obtained crystalline sulfide solid electrolyte was measured, and then, was 3.2 mS/cm. The obtained crystalline sulfide solid electrolyte was subjected to the X-ray diffractometry using CuKα line, and then, was found to have diffraction peaks at 2θ=20.3±0.6° and 29.7±0.7°, and the intensity of the peak at 2θ=20.3±0.6° was higher than the intensity of the peak at 29.7±0.7°, which confirmed that the crystalline sulfide solid electrolyte had a thio-LISICON Region II-type crystal structure. The X-ray diffraction pattern is shown in Fig. 1.

Examples 2 to 36

Crystalline sulfide solid electrolytes of Examples 2 to 36 were produced in the same manner as in Example 1 except for changing the types and blending ratio of the raw materials and the pulverization conditions (production methods) in Example 1 to those shown in Tables 1 to 3. The heating temperature of the product (amorphous sulfide solid electrolyte) in each Example was the Tc1 temperature in the Example.

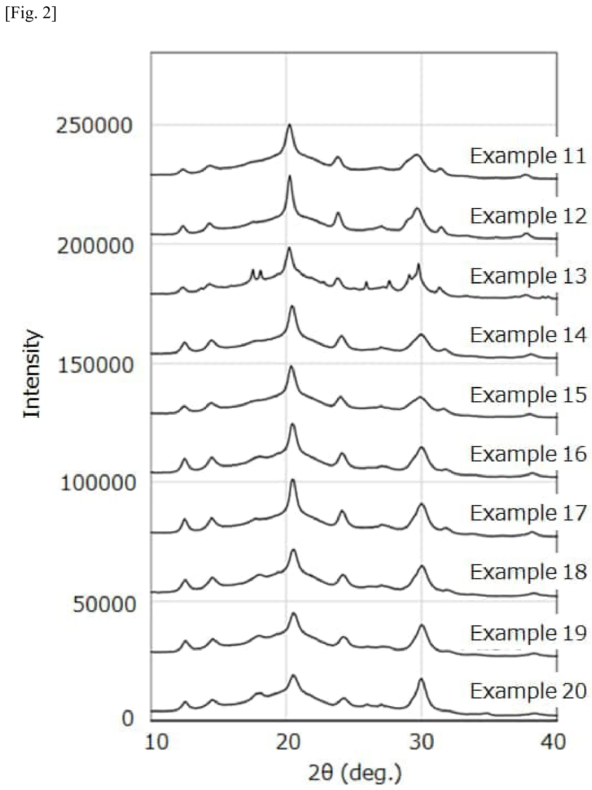

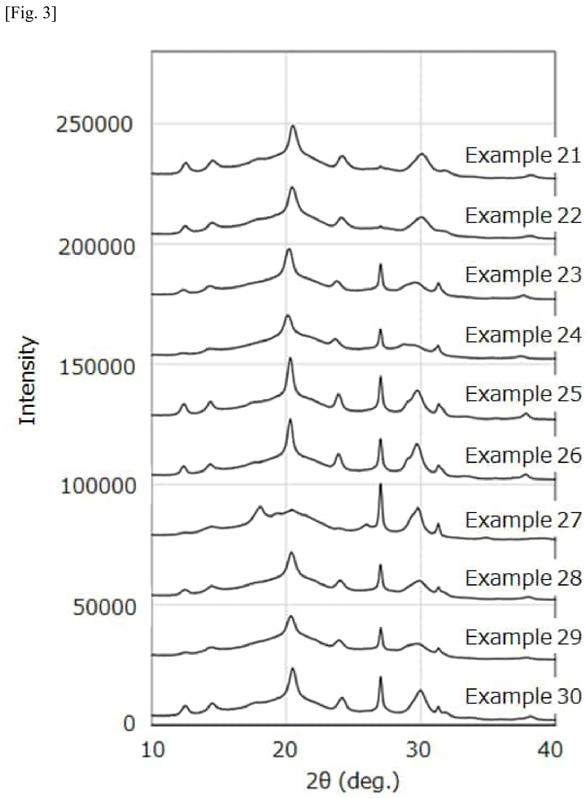

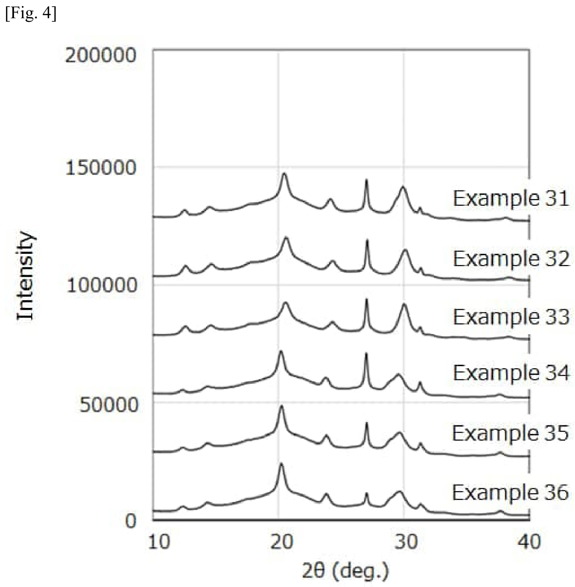

In the crystalline sulfide solid electrolyte obtained in each Example, x, y, and z in the compositional formula (1) are shown in Tables 1 to 3. The crystalline sulfide solid electrolyte obtained in each Example was subjected to the measurement of the ionic conductivity, the thermogravimetric and differential thermal analysis, and the powdery XRD diffraction measurement. The results are shown in Tables 1 to 3, X-ray diffraction patterns of Examples 2 to 10 are shown in Fig. 1, X-ray diffraction patterns of Examples 11 to 20 are shown in Fig. 2, X-ray diffraction patterns of Examples 21 to 30 are shown in Fig. 3, and X-ray diffraction patterns of Examples 31 to 36 are shown in Fig. 4.

Comparative Examples 1 to 15

Sulfide solid electrolytes of Comparative Examples were produced in the same manner as in Example 1 except for changing the types and blending ratio of the raw materials and the pulverization conditions (production methods) in Example 1 to those shown in Tables 4 and 5.

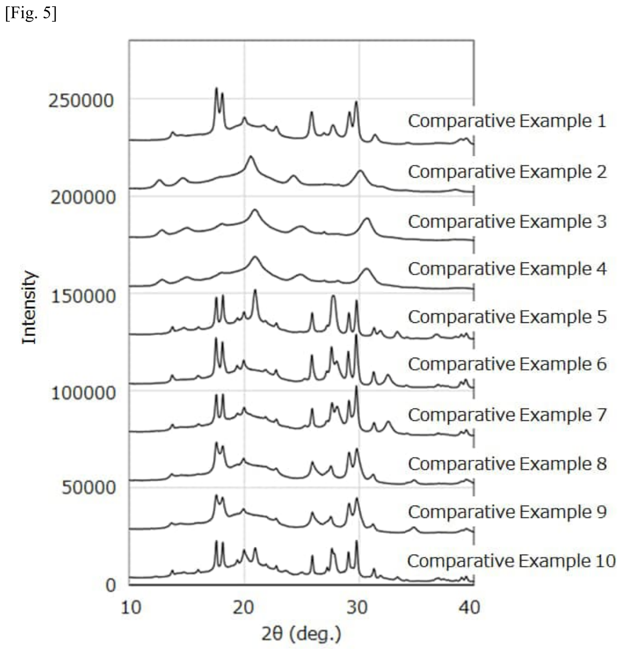

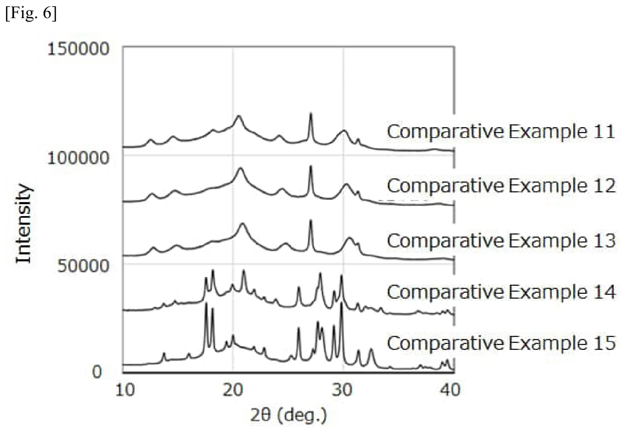

In the crystalline sulfide solid electrolyte obtained in each Comparative Examples, x, y, and z in the compositional formula (1) are shown in Tables 4 and 5. The crystalline sulfide solid electrolyte obtained in each Comparative Example was subjected to the measurement of the ionic conductivity, the thermogravimetric and differential thermal analysis, and the powdery XRD diffraction measurement. The results are shown in Tables 4 and 5, X-ray diffraction patterns of Comparative Examples 1 to 10 are shown in Fig. 5, and X-ray diffraction patterns of Comparative Examples 11 to 15 are shown in Fig. 6.

[Table 1]

Table 1

| | | Example | | | | | |
|---|---|---|---|---|---|---|---|
| | | 1 | 2 | 3 | 4 | 5 | 6 |
| $Li_2S$ | mol% | 65.62 | 67.50 | 67.50 | 67.50 | 71.25 | 67.50 |
| $P_2S_5$ | mol% | 21.44 | 21.60 | 21.15 | 21.15 | 21.85 | 20.70 |
| $P_2O_5$ | mol% | 0.44 | 0.90 | 1.35 | 1.35 | 1.90 | 1.80 |
| LiCl | mol% | 0.00 | 0.00 | 0.00 | 0.00 | 0.00 | 0.00 |
| LiBr | mol% | 6.25 | 0.00 | 5.00 | 7.50 | 0.00 | 0.00 |
| LiI | mol% | 6.25 | 10.00 | 5.00 | 2.50 | 5.00 | 10.00 |

(continued)

| | | Example | | | | | |
|---|---|---|---|---|---|---|---|
| | | 1 | 2 | 3 | 4 | 5 | 6 |
| Total | mol% | 100.00 | 100.00 | 100.00 | 100.00 | 100.00 | 100.00 |
| Pulverization conditions | | Production method 1 | Production method 1 | Production method 1 | Production method 1 | Production method 1 | Production method 1 |
| Rotation number | rpm | 370 | 370 | 370 | 370 | 370 | 370 |
| Pulverization time | hr | 40 | 40 | 40 | 40 | 40 | 40 |
| Ionic conductivity | mS/cm | 3.2 | 2.9 | 3.0 | 2.8 | 2.2 | 2.5 |
| Crystal structure | - | R+β | R+β+4141 | R | R+β | R | R |
| Thermogravimetric and differential thermal analysis | | | | | | | |
| Tc1 | °C | 215 | 227 | 224 | 224 | 244 | 228 |
| Tc2 | °C | 266 | 275 | 280 | 264 | 301 | 285 |
| ΔTc (Tc2-Te1) | °C | 51 | 48 | 56 | 40 | 57 | 57 |
| Compositional formula | | | | | | | |
| x | - | 0.01250 | 0.02500 | 0.03750 | 0.03750 | 0.05000 | 0.05000 |
| y | - | 12.5000 | 10.0000 | 10.0000 | 10.0000 | 5.0000 | 10.0000 |
| z | - | 0.0000 | 0.0000 | 0.0000 | 0.0000 | 0.0000 | 0.0000 |
| x×y | - | 0.15625 | 0.25000 | 0.37500 | 0.37500 | 0.25000 | 0.50000 |

Table 1 (continued)

| | | Example | | | | | |
|---|---|---|---|---|---|---|---|
| | | 7 | 8 | 9 | 10 | 11 | 12 |
| $Li_2S$ | mol% | 71.25 | 67.50 | 67.50 | 67.50 | 67.50 | 67.50 |
| $P_2S_5$ | mol% | 21.85 | 20.70 | 20.70 | 20.70 | 20.70 | 20.70 |
| $P_2O_5$ | mol% | 1.90 | 1.80 | 1.80 | 1.80 | 1.80 | 1.80 |
| LiCl | mol% | 0.00 | 0.00 | 5.00 | 0.00 | 0.00 | 0.00 |
| LiBr | mol% | 5.00 | 10.00 | 5.00 | 5.00 | 5.00 | 7.50 |
| LiI | mol% | 0.00 | 0.00 | 0.00 | 5.00 | 5.00 | 2.50 |
| Total | mol% | 100.00 | 100.00 | 100.00 | 100.00 | 100.00 | 100.00 |
| Pulverization conditions | | Production method 1 | Production method 1 | Production method 1 | Production method 1 | Production method 2 | Production method 1 |
| Rotation number | rpm | 370 | 370 | 370 | 370 | 220 | 370 |
| Pulverization time | hr | 40 | 40 | 40 | 40 | 40 | 40 |
| Ionic conductivity | mS/cm | 1.9 | 2.3 | 1.5 | 2.7 | 2.9 | 2.5 |

(continued)

| Pulverization conditions | | Production method 1 | Production method 1 | Production method 1 | Production method 1 | Production method 2 | Production method 1 |
|---|---|---|---|---|---|---|---|
| Crystal structure | - | R+β | R | R+β | R | R | R |
| Thermogravimetric and differential thermal analysis | | | | | | | |
| Tc1 | °C | 241 | 226 | 226 | 225 | 223 | 225 |
| Tc2 | °C | 277 | 267 | 262 | 273 | 289 | 278 |
| ΔTc (Tc2-Tc1) | °C | 36 | 41 | 36 | 48 | 66 | 53 |
| Compositional formula | | | | | | | |
| x | - | 0.05000 | 0.05000 | 0.05000 | 0.05000 | 0.05000 | 0.05000 |
| y | - | 5.0000 | 10.0000 | 10.0000 | 10.0000 | 10.0000 | 10.0000 |
| z | - | 0.0000 | 0.0000 | 0.0000. | 0.0000 | 0.0000 | 0.0000 |
| x×y | - | 0.25000 | 0.50000 | 0.50000 | 0.50000 | 0.50000 | 0.50000 |

[Table 2]

Table 2

| | | Example | | | | | |
|---|---|---|---|---|---|---|---|
| | | 13 | 14 | 15 | 16 | 17 | 18 |
| $Li_2S$ | mol% | 67.50 | 73.50 | 71.25 | 73.50 | 71.25 | 73.50 |
| $P_2S_5$ | mol% | 20.70 | 20.58 | 19.95 | 20.58 | 19.95 | 20.58 |
| $P_2O_5$ | mol% | 1.80 | 3.92 | 3.80 | 3.92 | 3.80 | 3.92 |
| LiCl | mol% | 5.00 | 0.00 | 0.00 | 0.00 | 0.00 | 2.00 |
| LiBr | mol% | 0.00 | 0.00 | 0.00 | 2.00 | 5.00 | 0.00 |
| LiI | mol% | 5.00 | 2.00 | 5.00 | 0.00 | 0.00 | 0.00 |
| Total | mol% | 100.00 | 100.00 | 100.00 | 100.00 | 100.00 | 100.00 |
| Pulverization conditions | | Production method 1 | Production method 1 | Production method 1 | Production method 1 | Production method 1 | Production method 1 |
| Rotation number | rpm | 370 | 370 | 370 | 370 | 370 | 370 |
| Pulverization time | hr | 40 | 40 | 40 | 40 | 40 | 40 |
| Ionic conductivity | mS/cm | 1.6 | 0.9 | 1.1 | 1.0 | 1.0 | 0.9 |
| Crystal structure | - | R+β | R | R | R | R | R |
| Thermogravimetric and differential thermal analysis | | | | | | | |
| Tc1 | °C | 223 | 258 | 245 | 255 | 244 | 254 |
| Tc2 | °C | 260 | 356 | 320 | 353 | 321 | 336 |

(continued)

| | | | | | | | |
|---|---|---|---|---|---|---|---|
| Thermogravimetric and differential thermal analysis | | | | | | | |
| ΔTc (Tc2-Tc1) | °C | 37 | 98 | 75 | 98 | 77 | 82 |
| Compositional formula | | | | | | | |
| x | - | 0.05000 | 0.10000 | 0.10000 | 0.10000 | 0.10000 | 0.10000 |
| y | - | 10.0000 | 2.0000 | 5.0000 | 2.0000 | 5.0000 | 2.0000 |
| z | - | 0.0000 | 0.0000 | 0.0000 | 0.0000 | 0.0000 | 0.0000 |
| x×y | - | 0.50000 | 0.20000 | 0.50000 | 0.20000 | 0.50000 | 0.20000 |

Table 2 (continued)

| | | Example | | | | | |
|---|---|---|---|---|---|---|---|
| | | 19 | 20 | 21 | 22 | 23 | 24 |
| $Li_2S$ | mol% | 71.25 | 67.50 | 73.50 | 71.25 | 76.00 | 72.00 |
| $P_2S_5$ | mol% | 19.95 | 18.90 | 19.60 | 19.00 | 17.48 | 16.56 |
| $P_2O_5$ | mol% | 3.80 | 3.60 | 4.90 | 4.75 | 1.52 | 1.44 |
| LiCl | mol% | 5.00 | 10.00 | 0.00 | 0.00 | 0.00 | 0.00 |
| LiBr | mol% | 0.00 | 0.00 | 0.00 | 0.00 | 0.00 | 0.00 |
| LiI | mol% | 0.00 | 0.00 | 2.00 | 5.00 | 5.00 | 10.00 |
| Total | mol% | 100.00 | 100.00 | 100.00 | 100.00 | 100.00 | 100.00 |
| Pulverization conditions | | Production method 1 | Production method 1 | Production method 1 | Production method 1 | Production method 1 | Production method 1 |
| Rotation number | rpm | 370 | 370 | 370 | 370 | 370 | 370 |
| Pulverization time | hr | 40 | 40 | 40 | 40 | 40 | 40 |
| Ionic conductivity | mS/cm | 0.9 | 0.9 | 0.7 | 0.8 | 2.0 | 2.5 |
| Crystal structure | - | R+L | R+L | R | R | R | R |
| Thermogravimetric and differential thermal analysis | | | | | | | |
| Tc1 | °C | 242 | 231 | 260 | 249 | 235 | 217 |
| Tc2 | °C | 298 | 301 | 367 | 324 | 300 | 303 |
| ΔTc (Tc2-Tc1) | °C | 56 | 70 | 107 | 75 | 65 | 86 |
| Compositional formula | | | | | | | |
| x | - | 0.10000 | 0.10000 | 0.12500 | 0.12500 | 0.04444 | 0.04444 |
| y | - | 5.0000 | 10.0000 | 2.0000 | 5.0000 | 6.1728 | 12.1951 |
| z | - | 0.0000 | 0.0000 | 0.0000 | 0.0000 | 0.5000 | 0.5000 |
| x×y | - | 0.50000 | 1.00000 | 0.25000 | 0.62500 | 0.27435 | 0.54201 |

[Table 3]

Table 3

| | | Example | | | | | |
|---|---|---|---|---|---|---|---|
| | | 25 | 26 | 27 | 28 | 29 | 30 |
| $Li_2S$ | mol% | 76.00 | 72.00 | 72.00 | 76.00 | 72.00 | 76.00 |
| $P_2S_5$ | mol% | 17.48 | 16.56 | 16.56 | 15.96 | 15.12 | 15.96 |
| $P_2O_5$ | mol% | 1.52 | 1.44 | 1.44 | 3.04 | 2.88 | 3.04 |
| LiCl | mol% | 0.00 | 0.00 | 10.00 | 0.00 | 0.00 | 0.00 |
| LiBr | mol% | 5.00 | 10.00 | 0.00 | 0.00 | 0.00 | 5.00 |
| LiI | mol% | 0.00 | 0.00 | 0.00 | 5.00 | 10.00 | 0.00 |
| Total | mol% | 100.00 | 100.00 | 100.00 | 100.00 | 100.00 | 100.00 |
| Pulverization conditions | | Production method 1 | Production method 1 | Production method 1 | Production method 1 | Production method 1 | Production method 1 |
| Rotation number | rpm | 370 | 370 | 370 | 370 | 370 | 370 |
| Pulverization time | hr | 40 | 40 | 40 | 40 | 40 | 40 |
| Ionic conductivity | mS/cm | 2.0 | 2.3 | 1.0 | 1.0 | 1.3 | 1.0 |
| Crystal structure | - | R | R | L | R | R | R |
| Thermogravimetric and differential thermal analysis | | | | | | | |
| Tc1 | °C | 237 | 221 | 222 | 242 | 223 | 239 |
| Tc2 | °C | 301 | 300 | 257 | 320 | 280 | 316 |
| ΔTc (Tc2-Tc1) | °C | 64 | 79 | 35 | 78 | 57 | 77 |
| Compositional formula | | | | | | | |
| x | - | 0.04444 | 0.04444 | 0.04444 | 0.08889 | 0.08889 | 0.08889 |
| y | - | 6.1728 | 12.1951 | 12.1951 | 6.1728 | 12.1951 | 6.1728 |
| z | - | 0.5000 | 0.5000 | 0.5000 | 0.5000 | 0.5000 | 0.5000 |
| x×y | - | 0.27435 | 0.54201 | 0.54201 | 0.54870 | 1.08401 | 0.54870 |

Table 3 (continued)

| | | Example | | | | | |
|---|---|---|---|---|---|---|---|
| | | 31 | 32 | 33 | 34 | 35 | 36 |
| $Li_2S$ | mol% | 72.00 | 76.00 | 72.00 | 74.25 | 72.00 | 69.75 |
| $P_2S_5$ | mol% | 15.12 | 15.96 | 15.12 | 14.49 | 16.56 | 18.63 |
| $P_2O_5$ | mol% | 2.88 | 3.04 | 2.88 | 1.26 | 1.44 | 1.62 |
| LiCl | mol% | 0.00 | 5.00 | 10.00 | 0.00 | 0.00 | 0.00 |
| LiBr | mol% | 10.00 | 0.00 | 0.00 | 5.00 | 5.00 | 5.00 |

(continued)

| | | Example | | | | | |
|---|---|---|---|---|---|---|---|
| | | 31 | 32 | 33 | 34 | 35 | 36 |
| LiI | mol% | 0.00 | 0.00 | 0.00 | 5.00 | 5.00 | 5.00 |
| Total | mol% | 100.00 | 100.00 | 100.00 | 100.00 | 100.00 | 100.00 |
| Pulverization conditions | | Production method 1 | Production method 1 | Production method 1 | Production method 1 | Production method 1 | Production method 1 |
| Rotation number | rpm | 370 | 370 | 370 | 370 | 370 | 370 |
| Pulverization time | hr | 40 | 40 | 40 | 40 | 40 | 40 |
| Ionic conductivity | mS/cm | 1.1 | 0.7 | 0.7 | 2.3 | 2.6 | 2.8 |
| Crystal structure | - | R | R | R+L | R | R | R |
| Thermogravimetric and differential thermal analysis | | | | | | | |
| Tc1 | °C | 223 | 238 | 225 | 216 | 219 | 221 |
| Tc2 | °C | 293 | 297 | 303 | 287 | 303 | 284 |
| $\Delta$Tc (Tc2-Tc1) | °C | 70 | 59 | 78 | 71 | 84 | 63 |
| Compositional formula | | | | | | | |
| x | - | 0.08889 | 0.08889 | 0.08889 | 0.04118 | 0.04444 | 0.04737 |
| y | - | 12.1951 | 6.1728 | 12.1951 | 13.6986 | 12.1951 | 10.9890 |
| z | - | 0.5000 | 0.5000 | 0.5000 | 0.8571 | 0.5000 | 0.2222 |
| x×y | - | 1.08401 | 0.54870 | 1.08401 | 0.56406 | 0.54201 | 0.52053 |

[Table 4]

Table 4

| | | Comparative Example | | | | |
|---|---|---|---|---|---|---|
| | | 1 | 2 | 3 | 4 | 5 |
| $Li_2S$ | mol% | 75.00 | 75.00 | 75.00 | 75.00 | 67.50 |
| $P_2S_5$ | mol% | 24.00 | 20.00 | 15.00 | 15.00 | 22.50 |
| $P_2O_5$ | mol% | 1.00 | 5.00 | 10.00 | 10.00 | 0.00 |
| LiCl | mol% | 0.00 | 0.00 | 0.00 | 0.00 | 0.00 |
| LiBr | mol% | 0.00 | 0.00 | 0.00 | 0.00 | 0.00 |
| LiI | mol% | 0.00 | 0.00 | 0.00 | 0.00 | 10.00 |
| Total | mol% | 100.00 | 100.00 | 100.00 | 100.00 | 100.00 |
| Pulverization conditions | | Production method 1 | Production method 2 | Production method 1 | Production method 2 | Production method 1 |
| Rotation number | rpm | 370 | 220 | 370 | 220 | 370 |
| Pulverization time | hr | 40 | 40 | 40 | 40 | 40 |

(continued)

| Pulverization conditions | | Production method 1 | Production method 2 | Production method 1 | Production method 2 | Production method 1 |
|---|---|---|---|---|---|---|
| Ionic conductivity | mS/cm | 0.4 | 0.5 | 0.2 | 0.1 | 0.5 |
| Crystal structure | - | β | R | R | R | β+4141 |
| Thermogravimetric and differential thermal analysis | | | | | | |
| Tc1 | °C | 240 | 261 | 268 | 268 | 224 |
| Tc2 | °C | N/A | N/A | N/A | N/A | 251 |
| ΔTc (Tc2-Tc1) | °C | N/A | N/A | N/A | N/A | 27 |
| Compositional formula | | | | | | |
| x | - | 0.02500 | 0.12500 | 0.25000 | 0.25000 | 0.00000 |
| y | - | 0.0000 | 0.0000 | 0.0000 | 0.0000 | 10.0000 |
| z | - | 0.0000 | 0.0000 | 0.0000 | 0.0000 | 0.0000 |
| x×y | - | 0.00000 | 0.00000 | 0.00000 | 0.00000 | 0.00000 |

Table 4(continued)

| | | Comparative Example | | | | |
|---|---|---|---|---|---|---|
| | | 6 | 7 | 8 | 9 | 10 |
| $Li_2S$ | mol% | 63.75 | 60.00 | 63.75 | 60.00 | 65.63 |
| $P_2S_5$ | mol% | 21.25 | 20.00 | 21.25 | 20.00 | 21.88 |
| $P_2O_5$ | mol% | 0.00 | 0.00 | 0.00 | 0.00 | 0.00 |
| LiCl | mol% | 0.00 | 0.00 | 15.00 | 20.00 | 0.00 |
| LiBr | mol% | 15.00 | 20.00 | 0.00 | 0.00 | 6.25 |
| LiI | mol% | 0.00 | 0.00 | 0.00 | 0.00 | 6.25 |
| Total | mol% | 100.00 | 100.00 | 100.00 | 100.00 | 100.00 |
| Pulverization conditions | | Production method 1 | Production method 1 | Production method 1 | Production method 1 | Production method 1 |
| Rotation number | rpm | 370 | 370 | 370 | 370 | 370 |
| Pulverization time | hr | 40 | 40 | 40 | 40 | 40 |
| Ionic conductivity | mS/cm | 0.3 | 0.8 | 0.5 | 0.6 | 0.2 |
| Crystal structure | - | β | β | β | β | β+4141 |
| Thermogravimetric and differential thermal analysis | | | | | | |
| Tc1 | °C | 215 | 209 | 212 | 211 | 215 |
| Tc2 | °C | 250 | 252 | 251 | 252 | 255 |
| ΔTc (Tc2-Tc1) | °C | 35 | 43 | 39 | 41 | 40 |
| Compositional formula | | | | | | |
| x | - | 0.00000 | 0.00000 | 0.00000 | 0.00000 | 0.00000 |
| y | - | 15.0000 | 20.0000 | 15.0000 | 20.0000 | 12.5000 |
| z | - | 0.0000 | 0.0000 | 0.0000 | 0.0000 | 0.0000 |

(continued)

| Compositional formula | | | | | | |
|---|---|---|---|---|---|---|
| x×y | - | 0.00000 | 0.00000 | 0.00000 | 0.00000 | 0.00000 |

[Table 5]

Table 5

| | | 11 | 12 | 13 | 14 | 15 |
|---|---|---|---|---|---|---|
| Li$_2$S | mol% | 80.00 | 80.00 | 80.00 | 65.25 | 64.20 |
| P$_2$S$_5$ | mol% | 16.80 | 15.20 | 13.60 | 22.77 | 20.54 |
| P$_2$O$_5$ | mol% | 3.20 | 4.80 | 6.40 | 1.98 | 0.86 |
| LiCl | mol% | 0.00 | 0.00 | 0.00 | 0.00 | 0.00 |
| LiBr | mol% | 0.00 | 0.00 | 0.00 | 5.00 | 14.40 |
| LiI | mol% | 0.00 | 0.00 | 0.00 | 5.00 | 0.00 |
| Total | mol% | 100.00 | 100.00 | 100.00 | 100.00 | 100.00 |
| Pulverization conditions | | Production method 1 | Production method 1 | Production method 1 | Production method 1 | Production method 1 |
| Rotation number | rpm | 370 | 370 | 370 | 370 | 370 |
| Pulverization time | hr | 40 | 40 | 40 | 40 | 20 |
| Ionic conductivity | mS/cm | 0.6 | 0.3 | 0.2 | 0.6 | 0.2 |
| Crystal structure | - | R | R | R | β+4141 | β |
| Thermogravimetric and differential thermal analysis | | | | | | |
| Tc1 | °C | 262 | 266 | 269 | 231 | 217 |
| Tc2 | °C | 370 | 400 | N/A | 252 | 263 |
| ∆Tc (Tc2-Tc1) | °C | 108 | 134 | N/A | 21 | 46 |
| Compositional formula | | | | | | |
| x | - | 0.08889 | 0.13333 | 0.17778 | 0.05238 | 0.02501 |
| y | - | 0.0000 | 0.0000 | 0.0000 | 9.1743 | 14.4061 |
| z | - | 0.5000 | 0.5000 | 0.5000 | -0.1818 | 0.0002 |
| x×y | - | 0.00000 | 0.00000 | 0.00000 | 0.48056 | 0.36031 |

The crystal structures shown in Tables 1 to 5 are as follows.

R: the main crystal structure has a thio-LISICON Region II-type crystal structure.
L: the main crystal structure has an LGPS-type crystal structure.
β: the main crystal structure is β-Li$_3$PS$_4$ (crystalline Li$_3$PS$_4$).
R+L: a thio-LISICON Region II-type crystal structure and the crystal structure have an LGPS-type crystal structure.
R+4141: having a thio-LISICON Region II-type crystal structure and crystalline Li$_4$PS$_4$I.
R+β: having a thio-LISICON Region II-type crystal structure and β-Li$_3$PS$_4$ (crystalline Li$_3$PS$_4$).
R+β+4141: having a thio-LISICON Region II-type crystal structure, β-Li$_3$PS$_4$ (crystalline Li$_3$PS$_4$), and crystalline

Li$_4$PS$_4$I.

β+4141: having β-Li$_3$PS$_4$ (crystalline Li$_3$PS$_4$) and crystalline Li$_4$PS$_4$I.

The production methods 1 and 2 regarding the pulverization conditions shown in Tables 1 to 5 are as follows.

Production method 1: it is pulverization conditions in Example 1, in which a raw material-containing substance was 1.5 g in total, and under a nitrogen atmosphere, was put into a zirconia pot of 45 ml together with ten 10-mm diameter zirconia balls (about 32 g), and the pot was completely sealed to make the interior thereof under an inert atmosphere (nitrogen atmosphere), and without heating or cooling (at room temperature), mechanical milling was performed using a planetary ball mill (manufactured by Fritsch Japan Co.,Ltd, model number: P-7) at the rotation number and the time shown in the tables.

Production method 2: it was the same as in the production method 1 except that the total of the raw material-containing substance was 10 g, 600 g of 10-mm diameter zirconia balls were put in a zirconia pot of 500 ml, a planetary ball mill (manufactured by Fritsch Japan Co.,Ltd,, model number: P-5) was used as a pulverizer, and the rotation number and the time shown in the Tables were adopted, in the production method 1.

It was found by Examples that the crystalline sulfide solid electrolytes of the present embodiment generally had a higher ionic conductivity as compared with the crystalline sulfide solid electrolytes of Comparative Examples. It was also found from Figs. 1 to 4 that all of the crystalline sulfide solid electrolytes of the present embodiment had diffraction peaks at 2θ=20.3° and 29.7°, and thus, had at least one crystal structure of a thio-LISICON Region II-type crystal structure and an LGPS-type crystal structure.

Regarding Comparative Examples, although the crystalline sulfide solid electrolytes of Comparative Examples 2 to 4 and 11 to 13 had a thio-LISICON Region II-type crystal structure, the ionic conductivities were all low because a halogen atom was not contained, and were not comparable to the ionic conductivities of the crystalline sulfide solid electrolytes of Examples. The low ionic conductivities of the crystalline sulfide solid electrolytes of Comparative Examples 11 to 13 are supposedly because lithium sulfide as a raw material, a diffraction peak of which was found, also had an influence. Since the crystalline sulfide solid electrolyte of Comparative Example 1 contained no halogen atom and had crystalline Li$_3$PS$_4$, the ionic conductivity was low.

Among the crystalline sulfide solid electrolytes of Comparative Examples 5 to 10 which contained a halogen atom but did not contain an oxygen atom, the crystalline sulfide solid electrolytes of Comparative Examples 5, 6, and 8 to 10 did also not have the ionic conductivity comparable to those of the crystalline sulfide solid electrolytes of Examples like in the other Comparative Examples. The ionic conductivity of the crystalline sulfide solid electrolyte of Comparative Example 7 showed a higher ionic conductivity as compared with the crystalline sulfide solid electrolytes of a few of Examples (Examples 32 and 33), but the amount of the raw material containing a halogen atom used was large and thus, the crystalline sulfide solid electrolyte of Comparative Example 7 was not said to be a sulfide solid electrolyte with reduced raw material costs.

The crystalline sulfide solid electrolyte of Comparative Example 14 had z in the compositional formula (1) of -0.1818, which indicates that the crystalline sulfide solid electrolyte had a composition largely shifted from the Li$_3$PS$_4$ structure in the ratio of lithium atoms and sulfur atoms. Since the shift from the basic skeleton was large, the crystalline sulfide solid electrolyte of Comparative Example 14 had neither a thio-LISICON Region II-type crystal structure nor an LGPS-type crystal structure and the ionic conductivity was low. The crystalline sulfide solid electrolyte of Comparative Example 15 did not have the specific diffraction peaks since pulverization was not sufficiently performed in production thereof. Thus, the ionic conductivity was extremely low.

It was confirmed from the above results that the crystalline sulfide solid electrolyte of the present embodiment can achieve a high ionic conductivity by containing a lithium atom, a sulfur atom, a phosphorus atom, an oxygen atom, and a halogen atom and having a composition represented by a specific compositional formula.

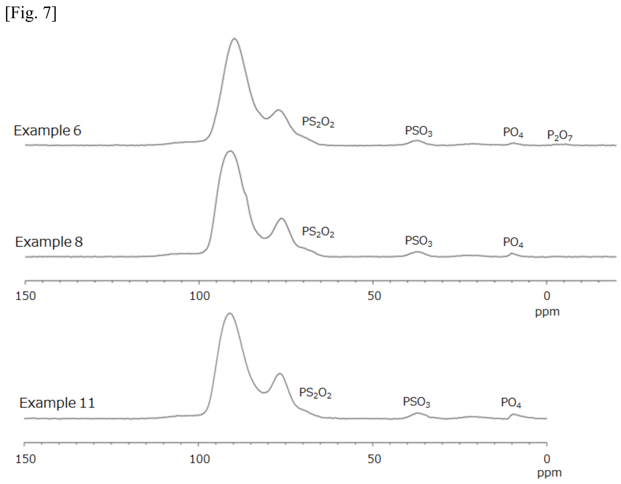

The crystalline sulfide solid electrolytes of Examples 6, 8, and 11 were subjected to the solid $^{31}$P-NMR measurement. Solid $^{31}$P-NMR spectra of the crystalline sulfide solid electrolytes obtained in these Examples are shown in Fig. 7.

With data obtained in the solid $^{31}$P-NMR measurement, based on the peak area derived from each structure, the ratio (mol%) of phosphorus contained in each structure was calculated. Specifically, from the ratio of the peak area of each structure based on the total area of the peaks derived from the structures shown in Table 6, the ratio (mol%) of phosphorus contained in each structure was calculated. The calculated ratio (mol%) of phosphorus in each structure is shown in Table 6.

[Table 6]

Table 6

| | | Example | | |
|---|---|---|---|---|
| | | 6 | 8 | 11 |
| $PSO_3^{3-}$ | P mol% | 1.70 | 1.80 | 2.00 |
| $PO_4^{3-}$ | P mol% | 0.60 | 0.60 | 1.20 |
| $PS_2O_2^{3-}$ | P mol% | 3.20 | 4.00 | 4.90 |
| R | P mol% | 82.50 | 69.40 | 74.00 |
| $Li_3PS_4$(crystalline) | P mol% | - | 7.50 | - |
| $Li_3PS_4$(amorphous) | P mol% | - | 13.70 | 15.40 |
| $P_2S_6^{4-}$ | P mol% | 2.80 | 3.00 | 2.50 |
| $P_2S_7^{4-}$ | P mol% | 0.40 | - | - |
| $Li_4PS_4I$ | P mol% | 8.80 | - | - |

In Table 6, "R" represents a thio-LISICON Region II-type crystal structure.

As shown in Table 6, in all of the crystalline sulfide solid electrolytes of Examples 6, 8, and 11, peaks derived from $PSO_3^{3-}$, $PO_4^{3-}$, and $PS_2O_2^{3-}$ are observed, and thus, it can be seen that an oxygen atom is incorporated in the crystal structure. It was also found that, in the crystalline sulfide solid electrolytes of the Examples, although the amount of the raw materials containing a halogen atom used was as low as 10.0 mol%, the crystalline sulfide solid electrolytes had a thio-LISICON Region II-type crystal structure and the ionic conductivities thereof were as high as 2.5, 2.3, and 2.9 mS/cm, respectively. From the above results, it was found that, by an oxygen atom incorporated in the crystal structure, even though the amount of halogen atoms contained is small, a sulfide solid electrolyte having a thio-LISICON Region II-type crystal structure which exhibits a high ionic conductivity can be obtained.

Industrial Applicability

The crystalline sulfide solid electrolyte of the present embodiment has a high ionic conductivity with reduced raw material costs, and has superior battery performance, and thus, is suitably used, for example, in an electrode mixture in combination with an electrode active material, or in a lithium ion battery. A lithium ion battery is suitably used as a battery to be used, for example, in information-related equipment and communication equipment, such as personal computers, video cameras, and mobile phones.

**Claims**

1. A crystalline sulfide solid electrolyte comprising a lithium atom, a phosphorus atom, a sulfur atom, an oxygen atom, and a halogen atom and having a composition represented by the following compositional formula (1):

$$(100\text{-}y)(0.5)(Li_{3+2z}P(S_{1-x}O_x)_{4+z})+(y)LiX \qquad (1)$$

wherein x, y, and z satisfy $0.00060 \leqq x \leqq 0.25$, $0.50 \leqq y \leqq 14.0$, and $-0.17 \leqq z \leqq 1.5$, respectively, and X represents a halogen atom.

2. The crystalline sulfide solid electrolyte according to claim 1, wherein in the compositional formula (1), a product of x and y ($x \times y$) is 0.0050 or more and 2.7 or less.

3. The crystalline sulfide solid electrolyte according to claim 1 or 2, wherein a peak derived from $PSO_3^{3-}$ is observed at $39.6 \pm 5.0$ ppm by a solid $^{31}$P-NMR measurement.

4. The crystalline sulfide solid electrolyte according to any one of claims 1 to 3, wherein a peak derived from $PO_4^{3-}$ is observed at $9.2 \pm 5.0$ ppm by the solid $^{31}$P-NMR measurement.

5. The crystalline sulfide solid electrolyte according to any one of claims 1 to 4, wherein a peak derived from $PS_2O_2^{3-}$ is observed at $70.3 \pm 5.0$ ppm by the solid $^{31}$P-NMR measurement.

6. The crystalline sulfide solid electrolyte according to any one of claims 1 to 5, wherein at least two exothermal peaks are measured in a thermogravimetric and differential thermal analysis (as measured at a temperature rising rate of 10°C/minute), the two exothermal peaks having a temperature difference at peak tops of 20°C or more and 110°C or less.

7. The crystalline sulfide solid electrolyte according to any one of claims 1 to 6, wherein the halogen atom is at least one halogen atom selected from a chlorine atom, a bromine atom, and an iodine atom.

8. The crystalline sulfide solid electrolyte according to any one of claims 1 to 7, wherein the halogen atom is a bromine atom and an iodine atom.

9. The crystalline sulfide solid electrolyte according to any one of claims 1 to 8, wherein the crystalline sulfide solid electrolyte has an ionic conductivity of 0.70 mS/cm or more.

10. The crystalline sulfide solid electrolyte according to any one of claims 1 to 9, wherein the crystalline sulfide solid electrolyte has an ionic conductivity of 2.5 mS/cm or more.

11. The crystalline sulfide solid electrolyte according to any one of claims 1 to 10, wherein at least one metal atom selected from a sodium atom, a boron atom, an aluminum atom, a silicon atom, a germanium atom, an arsenic atom, a selenium atom, an antimony atom, a tellurium atom, a lead atom, and a bismuth atom is not contained.

12. The crystalline sulfide solid electrolyte according to any one of claims 1 to 11, wherein the oxygen atom is derived from $P_2O_5$.

13. The crystalline sulfide solid electrolyte according to any one of claims 1 to 12, wherein the crystalline sulfide solid electrolyte is a glass ceramic.

[Fig. 1]

[Fig. 2]

[Fig. 3]

[Fig. 4]

[Fig. 5]

[Fig. 6]

[Fig. 7]

## INTERNATIONAL SEARCH REPORT

| International application No. |
| --- |
| **PCT/JP2024/019793** |

| A. | CLASSIFICATION OF SUBJECT MATTER |
| --- | --- |

*H01B 1/10*(2006.01)i; *C03C 10/16*(2006.01)i; *H01B 1/06*(2006.01)i; *H01B 1/08*(2006.01)i; *H01M 4/62*(2006.01)i; *H01M 10/052*(2010.01)i; *H01M 10/0562*(2010.01)i
FI:  H01B1/10; C03C10/16; H01B1/06 A; H01B1/08; H01M4/62 Z; H01M10/052; H01M10/0562

According to International Patent Classification (IPC) or to both national classification and IPC

| B. | FIELDS SEARCHED |
| --- | --- |

Minimum documentation searched (classification system followed by classification symbols)
H01B1/10; C03C10/16; H01B1/06; H01B1/08; H01M4/62; H01M10/052; H01M10/0562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2014-93261 A (IDEMITSU KOSAN CO., LTD.) 19 May 2014 (2014-05-19) paragraphs [0001]-[0103] | 1-2, 7-11, 13 |
| Y | | 12 |
| A | | 3-6 |
| Y | JP 2014-93263 A (IDEMITSU KOSAN CO., LTD.) 19 May 2014 (2014-05-19) paragraphs [0001]-[0092] | 12 |
| A | WO 2019/207956 A1 (TOKYO INSTITUTE OF TECHNOLOGY) 31 October 2019 (2019-10-31) paragraphs [0006], [0059]-[0060], fig. 6 | 3-5 |
| A | WO 2021/251406 A1 (SHOWA DENKO K.K.) 16 December 2021 (2021-12-16) paragraphs [0023], [0178], fig. 1-3 | 6 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **19 July 2024** | **30 July 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/019793**

| Patent document cited in search report | | | Publication date (day/month/year) | Patent family member(s) | | | Publication date (day/month/year) |
|---|---|---|---|---|---|---|---|
| JP | 2014-93261 | A | 19 May 2014 | US | 2015/0270571 | A1 | |
| | | | | paragraphs [0001]-[0331] | | | |
| | | | | WO | 2014/073197 | A1 | |
| | | | | EP | 2919313 | A1 | |
| JP | 2014-93263 | A | 19 May 2014 | (Family: none) | | | |
| WO | 2019/207956 | A1 | 31 October 2019 | US | 2021/0242491 | A1 | |
| | | | | paragraphs [0006], [0073]-[0075], fig. 6 | | | |
| | | | | EP | 3787091 | A1 | |
| | | | | CN | 112020787 | A | |
| | | | | JP | 2019-192490 | A | |
| WO | 2021/251406 | A1 | 16 December 2021 | US | 2023/0291003 | A1 | |
| | | | | paragraphs [0039]-[0040], [0288]-[0292], fig. 1-3 | | | |
| | | | | EP | 4167315 | A1 | |
| | | | | CN | 115699214 | A | |
| | | | | KR | 10-2023-0013088 | A | |
| | | | | JP | 2022-68359 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014093263 A
- JP 2014093261 A
- JP 2014089986 A

**Non-patent literature cited in the description**

- **KANNO**. *Journal of The Electrochemical Society*, 2001, vol. 148 (7), 742-746
- *Solid State Ionics*, 2006, vol. 177, 2721-2725